(19) Europäisches Patentamt / European Patent Office / Office européen des brevets

(11) EP 4 663 332 A1

(12) **EUROPEAN PATENT APPLICATION**
published in accordance with Art. 153(4) EPC

(43) Date of publication:
**17.12.2025 Bulletin 2025/51**

(21) Application number: **24784630.6**

(22) Date of filing: **26.02.2024**

(51) International Patent Classification (IPC):
***B23K 11/24*** $^{(2006.01)}$ ***B23K 11/11*** $^{(2006.01)}$

(52) Cooperative Patent Classification (CPC):
**B23K 11/11; B23K 11/24**

(86) International application number:
**PCT/JP2024/006687**

(87) International publication number:
**WO 2024/209831 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 JP 2023059769**

(71) Applicant: **JFE Steel Corporation**
**Tokyo 100-0011 (JP)**

(72) Inventors:
- **SAWANISHI Chikaumi**
  **Tokyo 100-0011 (JP)**
- **KANAZAWA Tomomi**
  **Tokyo 100-0011 (JP)**
- **KAWABE Nao**
  **Tokyo 100-0011 (JP)**
- **TAKASHIMA Katsutoshi**
  **Tokyo 100-0011 (JP)**
- **YAMAMOTO Shunsuke**
  **Tokyo 100-0011 (JP)**

(74) Representative: **Hoffmann Eitle**
**Patent- und Rechtsanwälte PartmbB**
**Arabellastraße 30**
**81925 München (DE)**

# (54) RESISTANCE SPOT WELDING METHOD AND METHOD FOR MANUFACTURING WELDED MEMBER

(57) The present invention is directed to the provision of a resistance spot welding method and a method for producing a welded member. The present invention provides a resistance spot welding method for joining a plurality of steel sheets together by clamping a sheet assembly, consisting of the plurality of overlapping steel sheets, between a pair of welding electrodes, and applying a current to the sheet assembly while applying pressure thereon, the method including a holding step of holding the welding electrodes after completion of the application of current. In the holding step, a pressure holding time is controlled within a predetermined time range defined by a particular relational expression using the C content, the Si content, and the Mn content of a steel sheet, the thickness of a decarburized layer per one surface of the steel sheet, and the amount of internal oxidation per one surface of the steel sheet.

FIG. 1

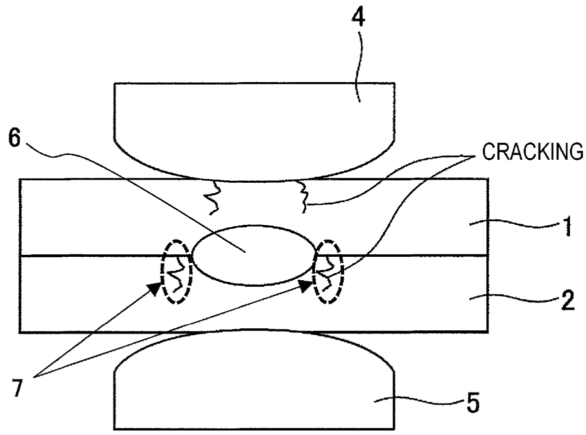


EP 4 663 332 A1

## Description

### Technical Field

The present invention relates to a resistance spot welding method for steel sheets and a method for producing a welded member, and more particularly to a resistance spot welding method suitable to weld members which are structural parts of an automobile or the like, and to a method for producing a welded member.

### Background Art

In recent years, $CO_2$ emission regulations have become stricter due to growing environmental concerns, and in the automotive field, weight reduction of car bodies to improve fuel efficiency has become an issue. For this reason, the use of high-strength steel sheets for automotive parts is being promoted to reduce their thickness; the use of a steel sheet having a tensile strength (TS) of 980 MPa or more is being promoted. In addition, from the viewpoint of corrosion resistance, a coated steel sheet such as a galvanized steel sheet, having anti-rust properties, is used in a portion which is to be exposed to rainwater.

In the assembly of an automobile, automotive parts that have been press-formed are often assembled by resistance spot welding from the viewpoint of cost and production efficiency. A resistance spot welding method, which is a type of lap resistance welding method, is generally used to join overlapping steel sheets together. This welding method involves clamping two or more overlapping steel sheets between a pair of welding electrodes from above and below, and passing a high welding current between the upper and lower electrodes for a short period of time while pressing the steel sheets with the welding electrodes, thereby joining the steel sheets together. FIG. 1 illustrates an example of resistance spot welding in which two overlapping steel sheets 1, 2 are clamped between welding electrodes 4, 5. This method utilizes resistance heat, generated by applying a high welding current to the steel sheets, to obtain a spot-like weld 6. The spot-like weld 6 is called a nugget, and is a portion where the two overlapping steel sheets 1, 2 have melted in an area of contact between the steel sheets upon application of current to the steel sheets, and the melt has then solidified. The steel sheets are thus joined together at the spot-like portion.

Resistance spot welding of a sheet assembly, consisting of a plurality of overlapping steel sheets including a surface-treated steel sheet(s), has the problem of the possible occurrence of cracking (hereinafter referred to as "LME cracking") in a weld due to liquid metal embrittlement. Here, the surface-treated steel sheet refers to a steel sheet which has a metal coating layer, such as a galvanized layer as typified by an electrogalvanized layer or a hot-dip galvanized layer (including galvannealed layer), or a zinc alloy coating layer containing, besides zinc, an element such as aluminum, magnesium, or the like, on the surface of a base material (base steel sheet). The melting point of a galvanized layer or a zinc alloy coating layer is lower than the melting point of the base material of such a surface-treated steel sheet. This causes the following problems.

LME cracking in a weld is considered to be caused by so-called liquid metal embrittlement: A metal coating layer having a low melting point on the surface of a steel sheet melts during welding. When the pressure of welding electrodes or tensile stress due to thermal expansion or contraction of steel sheets is applied to a weld, the molten low-melting metal penetrates into the grain boundaries of the base material of the surface-treated steel sheet, reducing the grain boundary strength and causing cracking. As shown in FIG. 1, LME cracking can occur at various locations, for example, in the surface of the steel sheet 1 or 2 on the side in contact with the welding electrode 4 or 5, or on the side in contact the other steel sheet.

Countermeasures against such LME cracking include techniques disclosed in Patent Literatures 1 to 4. Patent Literature 1 proposes a particular composition for steel sheets of a sheet assembly, in particular a composition comprising, in % by weight, C: 0.003 to 0.01%, Mn: 0.05 to 0.5%, P: 0.02% or less, sol. Al: 0.1% or less, Ti: $48 \times (N/14)$ to $48 \times \{(N/14) + (S/32)\}$%, Nb: $93 \times (C/12)$ to 0.1%, B: 0.0005 to 0.003%, N: 0.01% or less, and Ni: 0.05% or less, with the balance being Fe and incidental impurities.

Patent Literature 2 proposes a resistance spot welding method for high-strength coated steel sheets, which involves setting a welding current application time and a holding time after welding current application in resistance spot welding such that the following conditional expressions (A) and (B) are satisfied:

$$0.25 \times (10 \times t + 2)/50 \leq WT \leq 0.50 \times (10 \times t + 2)/50 \quad (A)$$

$$300 - 500 \times t + 250 \times t^2 \leq HT \quad (B)$$

where t is sheet thickness (mm), WT is welding current application time (ms), and HT is holding time after welding current application (ms).

Patent Literature 3 proposes, in carrying out welding, to appropriately set a current application time and an electrode holding time after current application depending on the thickness of a steel sheet, and to use a high-tensile galvanized steel sheet in which the amounts of alloy elements are below a certain level.

Patent Literature 3 proposes a method in which an electric current is applied in a multi-stage application pattern with three or more stages, in which welding conditions, such as a current application time and a welding current, are adjusted to achieve an appropriate current range of 1.0 kA or more, preferably 2.0 kA or more, and in which a cooling time is provided between each stage. The appropriate current range ΔI refers to a current range which can stably form a nugget having a diameter equal to or greater than a desired diameter, and having a residual thickness after melting of 0.05 mm or more.

Patent Literature 4 discloses a resistance spot welding method for members to be welded, including a galvanized steel sheet. Patent Literature 4 proposes a method to reduce LME cracking that may occur just outside a corona bond or in a corona bond and in the vicinity of a nugget, and to ensure joint strength. The method involves setting a post-weld holding time Ht (sec), from the end of welding current application between welding electrodes until detachment of the welding electrodes from the welded members, within the range of the following conditional expression (C):

$$0.015t^2 + 0.020 \leq Ht \leq 0.16t^2 - 0.40t + 0.70 \quad (C)$$

where t is the total thickness (mm) of the steel sheets.

Citation List

Patent Literature

PTL 1: Japanese Unexamined Patent Application Publication No. 10-195597
PTL 2: Japanese Unexamined Patent Application Publication No. 2003-103377
PTL 3: Japanese Unexamined Patent Application Publication No. 2003-236676
PTL 4: Japanese Unexamined Patent Application Publication No. 2017-47475

Summary of Invention

Technical Problem

However, the technique of Patent Literature 1 requires limiting the amounts of alloy elements in a steel sheet, posing problems such as a restriction on the use of steel sheets that meet the required performance. In particular, in the recent situation of steel sheets where they are becoming more highly alloyed with the trend toward higher strength, the application of the technique of Patent Literature 1 is extremely limited.

Patent Literature 2 only proposes a method for preventing cracking when a welding current is set which is so large that splash will occur. The literature is silent on cracking in a state in which splash does not occur.

The method of Patent Literature 3 has a drawback that many man-hours are required to optimize welding conditions, and also has a drawback that the method cannot be applied to a steel sheet and a sheet assembly for which it is difficult to ensure the appropriate current range. In addition, no study is made in Patent Literatures 2 and 3 on the influence of a welding operation disturbance, such as the inclination angle of electrodes; therefore, the methods of the literatures may be sometimes insufficient as a countermeasure when the actual operation during assembly of an automobile is taken into consideration.

While Patent Literature 4 proposes an electrode holding time that prevents LME cracking in the surface of a steel sheet on the side where steel sheets are in contact with each other, no study is made on the influence of the components of a steel sheet and of its surface properties. The method of the literature has the problem of a limitation being placed on the electrode holding time that is effective in preventing LME cracking.

In addition, no study is made in Patent Literatures 1 to 4 on cracking (hereinafter referred to as "cold cracking") that occurs in the surface of a steel sheet in a weld heat affected zone on the side where steel sheets are in contact with each other after the weld heat affected zone, on the side where the steel sheets are in contact with each other, undergoes martensite transformation by cooling after completion of the application of current.

The present invention has been made in view of the above situation. It is therefore an object of the present invention to provide a resistance spot welding method and a method for producing a welded member, which can prevent both LME cracking and cold cracking in the surface of a weld heat affected zone, especially on the side where steel sheets are in contact with each other, by optimizing an electrode holding time depending on the components and surface states of the steel sheets and on welding operation disturbances. Solution to Problem

The present inventors have conducted intensive studies in order to achieve the above object.

A description is first given of LME cracking. The effects of the present invention against LME cracking, which can occur during welding in the surface of a steel sheet on the side where steel sheets are in contact with each other (see FIG. 1), cannot be explained simply because it is affected by a variety of complex factors; however, the following may explain the basic mechanism.

A cause of cracking in a weld is the generation of the below-described tensile stress, which may occur when the coating metal of a galvanized steel sheet at a high temperature is in contact with the base material (base steel sheet). The steel sheet has a region where the tensile stress increases locally when welding electrode leave the steel sheet after the completion of welding. In particular, an area around the weld is compressed and deformed due to the expansion of the weld during the application of a current. Solidification and shrinkage of the weld then occurs due to cooling of the weld after completion of the application of current. When the steel sheet is being pressed by the welding electrodes, the stress remains in a compressed state due to the pressure applied, or the stress is relaxed even if it is in a tensile state. Upon release from the restraint by the pressure of the electrodes, there will be a region where the tensile stress becomes locally high. LME cracking may occur in this region.

The present inventors performed resistance spot welding under various welding conditions, as will be detailed in the below-described technical concept, and obtained the following findings regarding LME cracking. (i) It was found that alloy elements in a steel sheet, such as C, Si, and Mn, have an effect on LME cracking. (ii) In addition, it was found that since LME cracking occurs in the surface of a steel sheet in contact with a molten low-melting metal, not only the average content of an alloy element(s) in the steel sheet, but the concentration of an alloy element(s) dissolved in the surface of the steel sheet is also important. It was discovered that the concentration of an alloy element(s) dissolved in the surface of a steel sheet is greatly affected especially by the thickness of a decarburized layer and the amount of internal oxidation in the surface of the steel sheet. (iii) Further, as a result of LME cracking evaluation tests conducted under various disturbances, it was also found that LME cracking is more likely to occur when there is a welding operation disturbance(s) such as electrode inclination angle.

Next, a description will be given of cold cracking. The effects of the present invention against cold cracking that can occur during welding cannot be explained simply because, as with LME cracking, cold cracking is affected by a variety of complex factors; however, the following may explain the basic mechanism.

During resistance spot welding, a weld heat affected zone is heated to a temperature range where it becomes a single phase of austenite. The weld heat affected zone then undergoes martensite transformation by cooling, and is then cooled to room temperature while undergoing auto-tempering. When a pressure holding time for holding the pressure applied by welding electrodes after completion of the application of current is long, the cooling rate after completion of the martensite transformation will be very high due to heat transfer from the welding electrodes to steel sheets. Therefore, auto-tempering of the weld heat affected zone does not occur sufficiently, and the weld heat affected zone becomes a very brittle martensite microstructure. When a region in the surface of a steel sheet on the side where steel sheets are in contact with each other, in which tensile stress has become high locally after release from the restraint by the pressure of the electrodes, has a brittle martensite microstructure, brittle fracture may occur within the grains of the martensite microstructure or at the grain boundaries, resulting in the occurrence of cold cracking. Cold cracking is promoted especially by diffusion of hydrogen, contained in a rust-preventive oil or contaminants attached to the surface of a steel sheet, from the surface of the steel sheet on the side where steel sheets are in contact each other into the steel sheet.

As with the above-described LME cracking, the present inventors performed resistance spot welding under various welding conditions, as will be detailed in the below-described technical concept, and obtained the following findings regarding cold cracking. (iv) It was found that alloy elements in a steel sheet, such as C, Si, and Mn, have an effect on cold cracking. (v) In addition, it was discovered that since cold cracking occurs from the surface of a steel sheet where it is in contact with the opposing steel sheet, cold cracking is greatly affected not only by the average content of an alloy element(s) in the steel sheet, but by the concentration of an alloy element(s) dissolved in the surface of the steel sheet, especially by the thickness of a decarburized layer and the amount of internal oxidation in the surface of the steel sheet. (vi) Further, as a result of cold cracking evaluation tests conducted under various disturbances, it was also found that cold cracking is more likely to occur when there is a welding operation disturbance such as electrode inclination angle.

Thus, it has been found that appropriately controlling a pressure holding time after completion of the application of current depending on the contents of alloy elements in a steel sheet and the surface state of the steel sheet is effective in reducing LME cracking and cold cracking. It has also been found that further taking into account operation disturbances during welding is more effective in reducing such cracking.

The present invention is based on the above findings, and is summarized as follows.

[1] A resistance spot welding method for joining a plurality of steel sheets together by clamping a sheet assembly, consisting of the plurality of overlapping steel sheets, between a pair of welding electrodes, and applying a current to the sheet assembly while applying pressure thereon, the method comprising a holding step of holding the welding electrodes after completion of the application of current, wherein in the holding step, a pressure holding time H (ms) satisfies X1max < H < X2min, where X1max is the maximum value of the calculated values X1 of the following formula (1) for each steel sheet, and X2min is the minimum value of the calculated values X2 of the following formula (2) for each steel sheet:

$$100 \times \{(C - tc) + (Si - 2 \times Os)/5 + Mn/40\} = X1 \quad (1)$$

$$2000 - 600 \times \{(C - tc) + (Si - 2 \times Os)/20 + Mn/40\} = X2 \quad (2)$$

where C (mass %), Si (mass %), and Mn (mass %) represent the C content, the Si content, and the Mn content of the steel sheet, tc (mm) represents the thickness of a decarburized layer per one surface of the steel sheet, and Os ($g/m^2$) represents the amount of internal oxidation per one surface of the steel sheet.

[2] The resistance spot welding method according to [1], wherein in the holding step, the pressure holding time H (ms) satisfies Y1max < H < Y2min, where Y1max is the maximum value of the calculated values Y1 of the following formula (3) for each steel sheet, and Y2min is the minimum value of the calculated values Y2 of the following formula (4) for each steel sheet:

$$(1 + 0.1 \times t_{all}) \times [100 \times \{(C - tc) + (Si - 2 \times Os)/5 + Mn/40\}] = Y1 \quad (3)$$

$$(1 - 0.8/t_{all}) \times [2000 - 600 \times \{(C - tc) + (Si - 2 \times Os)/20 + Mn/40\}] = Y2 \quad (4)$$

where C (mass %), Si (mass %), and Mn (mass %) represent the C content, the Si content, and the Mn content of the steel sheet, tc (mm) represents the thickness of a decarburized layer per one surface of the steel sheet, Os ($g/m^2$) represents the amount of internal oxidation per one surface of the steel sheet, and $t_{all}$ (mm) represents the sum of the thicknesses of the plurality of overlapping steel sheets.

[3] The resistance spot welding method according to [1] or [2], wherein resistance spot welding is performed such that upon the application of current, the shortest distance Le from the center of a welding spot to an end surface of the steel sheet is more than 3.0 mm, and, when there are one or more welded spots around the welding spot, the center-to-center distance Lp between the welding spot and a welded spot closest to the welding spot is 6.0 mm or more.

[4] A method for producing a welded member, comprising:

a first step of stacking a plurality of steel sheets to obtain a sheet assembly; and
a second step of resistance-spot-welding the sheet assembly by the resistance spot welding method according to any one of [1] to [3].

Advantageous Effects of Invention

According to the present invention, it is possible to optimize an electrode holding time after completion of the application of current depending on the components and surface states of overlapping steel sheets and regardless of the strengths, the assembly, etc. of the steel sheets. This makes it possible to provide a resistance spot welding method and a method for producing a welded member, which can reduce LME cracking and cold cracking that occur in the surface of a steel sheet in a weld heat affected zone on the side where steel sheets are in contact with each other.

Brief Description of Drawings

[FIG. 1] FIG. 1 is a cross-sectional diagram schematically illustrating an example of cracking which occurs during resistance spot welding.

[FIG. 2] FIG. 2 is a graph showing the relationship between a composition (C content) and the surface state of a steel sheet, pressure holding time after completion of application of current, and LME cracking depth in a welded member in the present invention.

[FIG. 3] FIG. 3 is a graph showing the relationship between welding operation disturbances, pressure holding time after completion of application of current, and LME cracking depth in a welded member in the present invention.

[FIG. 4] FIG. 4 is a graph showing the relationship between a composition (C content) and the surface state of a steel sheet, pressure holding time after completion of application of current, and cold cracking depth in a welded member in the present invention.

[FIG. 5] FIG. 5 is a graph showing the relationship between welding operation disturbances, pressure holding time after completion of application of current, and cold cracking depth in a welded member in the present invention.
[FIG. 6] FIG. 6 is a graph showing the relationship between a composition (Si content) and the surface state of a steel sheet, pressure holding time after completion of application of current, and LME cracking depth in a welded member in the present invention.
[FIG. 7] FIG. 7 is a cross-sectional view, taken in a sheet thickness direction, of an example of a steel sheet for use in the present invention, illustrating the surface state of a steel sheet.
[FIG. 8] FIG. 8 is a diagram illustrating Le, which is the shortest distance from the center of a welding spot to an end surface of a steel sheet, in the present invention.
[FIG. 9] FIG. 9 is a diagram illustrating Lp, which is the center-to-center distance between a welding spot and an adjacent welded spot, in the present invention.

Description of Embodiments

A resistance spot welding method and a method for producing a welded member, according to an embodiment of the present invention, will now be described. It should be noted that the present invention is not limited to this embodiment.
First, the technical concept of the present invention will be described in detail with reference to FIGS. 2 through 6.
As described above, the present invention is targeted at LME cracking and cold cracking that occur in the surface of a steel sheet in a weld heat affected zone on the side where steel sheets are in contact with each other (see reference numeral 7 in FIG. 1). The present inventors have found that in order to reduce such cracking, it is effective to control a pressure holding time after completion of the application of current at a certain value or less depending on welding operation disturbances and the contents of alloy elements in the steel sheet, and on the thickness of a decarburized layer and the amount of internal oxidation in the surface of the steel sheet. The following are representative findings.
FIG. 2 is a graph for evaluating the relationship between pressure holding time (ms) after completion of the application of current and LME cracking depth (μm) as observed when resistance spot welding operations were performed in the presence of welding operation disturbances using steel sheets respectively having C contents of 0.1 mass %, 0.2 mass %, and 0.3 mass %. In FIG. 2, the square points represent data for the steel sheet having a C content of 0.1 mass %, the triangular points represent data for the steel sheet having a C content of 0.2 mass %, and the circular and rhombic points represent data for the steel sheet having a C content of 0.3 mass %.
In this experiment, sheet assemblies, each consisting of two overlapping steel sheets of the same type, were prepared, and welding was performed under various welding conditions. The welding conditions were arbitrarily set within a pressure range of 2.0 to 10.0 kN, within a welding current range of 4.0 to 15.0 kA, and within a current application time range of 100 to 2000 ms. The "presence of welding operation disturbances" refers to the presence of one or more of the following: the inclination angle of welding electrodes, a misalignment between the welding electrodes, a gap between a welding electrode and a steel sheet, and a gap between steel sheets. Using the welded members, the LME cracking depth of each welded member was measured by the method described in the Examples below.
As shown in FIG. 2, LME cracking did not occur in any steel sheet when the pressure holding time was 200 ms or more. The data of FIG. 2 indicates that the pressure holding time required to prevent LME cracking tends to increase as the C content of the steel sheet increases. This may be because an increase in the C content increases the high-temperature strength of a weld heat affected zone through its solid solution strengthening, leading to an increase in the tensile stress applied to the surface of the steel sheet in the weld heat affected zone upon release from the electrodes. Therefore, LME cracking is more likely to occur.
The pressure holding time required to prevent LME cracking was shorter for a steel sheet having a C content of 0.3 mass %, in which the thickness (tc) of the below-described decarburized layer per one surface of the steel sheet was 0.1 mm and the amount (Os) of internal oxidation per one surface of the steel sheet was 0.2 $g/m^2$ (see the rhombic points in FIG. 2), than for a steel sheet having a C content of 0.3 mass %, and having no decarburized layer and no internal oxidation amount (see the circular points in FIG. 2).
This may be because the low C content of the decarburized layer decreases the high-temperature strength of the surface of the steel sheet in the weld heat affected zone, thereby reducing the tensile stress applied to the surface of the steel sheet in the weld heat affected zone upon release from the electrodes. Accordingly, LME cracking is less likely to occur. When the amount of internal oxidation is large, the amount of dissolved Si in the surface of the steel sheet is small. In an Fe-Zn system phase diagram, Si reduces the solidus temperature at the same Zn concentration and shifts the solidus concentration toward the Fe side. Therefore, when a zinc-based coating on the surface of a steel sheet melts and Zn diffuses into the steel sheet during resistance spot welding, if the steel sheet has a high Si content, the steel sheet and liquid Zn will be in contact with each other for a long time until a lower temperature and a lower Zn concentration region, whereby LME cracking is more likely to occur. Thus, when the amount of internal oxidation is large and the amount of dissolved Si in the surface of a steel sheet is small, the steel sheet and liquid Zn will be in contact with each other at a higher temperature for a shorter time; therefore, LME cracking is less likely to occur.
As shown in FIG. 3, the results of the LME cracking evaluation experiment conducted under various disturbances indicate that LME cracking is more likely to occur when welding operation disturbances such as electrode inclination angle are present. This may be because welding operation disturbances cause a large localized compressive plastic deformation during the application of current, resulting in very high tensile stress after release from the electrodes. As described above, when tensile stress is applied to a weld, a molten low-melting metal penetrates into the grain boundaries of the base material, reducing the grain boundary strength and causing LME cracking. It is therefore conceivable that the occurrence of LME cracking can be more effectively reduced if the temperature of a weld can be appropriately reduced upon the generation of high tensile stress so as to prevent the penetration of the low-melting metal into the grain boundaries of the steel sheet.

The experiment of FIG. 3 was performed using steel sheets having the same C content. A composite disturbance, which is a combination of "electrode inclination angle" and "gap between a welding electrode and a steel sheet", was used in the experiment at varying electrode inclination angles in the range of 5 to 15 degrees.

FIG. 4 is a graph for evaluating the relationship between pressure holding time after completion of the application of current and cold cracking depth as observed when a resistance spot welding experiment was performed using the same steel sheets as used in the welding experiment of FIG. 2. In this experiment, welding was performed using the same sheet assemblies, welding conditions, and welding operation disturbances as used in the welding experiment of FIG. 2. The resulting welded members were subjected to measurement of cold cracking depth performed by the method described in the Examples below.

As shown in FIG. 4, cold cracking did not occur in any steel sheet when the pressure holding time was 1000 ms or less. The data of FIG. 4 indicates that the pressure holding time required to prevent cold cracking tends to decrease as the C content of the steel sheet increases. This may be because as the C content increases, a weld heat affected zone is more likely to become hard and brittle martensite. Further, an increase in the C content increases the tensile stress applied to the surface of the steel sheet in the weld heat affected zone upon release from the electrodes. Therefore, cold cracking is more likely to occur.

The pressure holding time required to prevent cold cracking was longer for a steel sheet having a C content of 0.3 mass %, in which the thickness (tc) of the below-described decarburized layer was 0.1 mm and the amount (Os) of internal oxidation was 0.2 $g/m^2$ (see the rhombic points in FIG. 4), than for a steel sheet having a C content of 0.3 mass %, and having no decarburized layer and no internal oxidation amount (see the circular points in FIG. 4). This may be because the low C content of the decarburized layer reduces martensite embrittlement in the surface of the steel sheet in the weld heat affected zone and, in addition, reduces the tensile stress applied to the surface of the steel sheet in the weld heat affected zone upon release from the electrodes. Accordingly, cold cracking is less likely to occur. When the amount of internal oxidation is large, the amount of dissolved Si in the surface of the steel sheet is small, and the martensite transformation start temperature is high. This leads to an increase in the range of temperature and time where auto-tempering occurs after the start of martensite transformation. Accordingly, embrittlement of the surface of the steel sheet in the weld heat affected zone is reduced, whereby cold cracking is less likely to occur.

When the pressure holding time after completion of the application of current was not more than 1000 ms, that is the minimum value shown in FIG. 4, no cold cracking occurred under any of the conditions tested.

As shown in FIG. 5, the results of the cold cracking evaluation experiment conducted under various disturbances indicate that as with LME cracking, cold cracking is more likely to occur when welding operation disturbances such as electrode inclination angle are present. This may be because welding operation disturbances cause a large localized compressive plastic deformation during the application of current, resulting in very high tensile stress after release from the electrodes. As described above, cold cracking may occur when a region in the surface of a steel sheet on the side where steel sheets are in contact with each other, in which tensile stress applied to a weld becomes high locally, has a brittle martensite microstructure. Therefore, if the pressure holding time after completion of the application of current is prevented from becoming excessively long, the cooling rate after martensite transformation is reduced, promoting auto-tempering and preventing the martensite microstructure from becoming brittle in the vicinity of the surface of the steel sheet on the side where steel sheets are in contact with each other. Accordingly, the occurrence of cold cracking can be more effectively reduced.

The experiment of FIG. 5 was performed using steel sheets having the same C content. A composite disturbance, which is a combination of "electrode inclination angle" and "gap between a welding electrode and a steel sheet", was used in the experiment at varying electrode inclination angles in the range of 5 to 15 degrees.

FIG. 6 is a graph for evaluating the relationship between pressure holding time after completion of the application of current and LME cracking depth as observed when resistance spot welding operations were performed in the presence of welding operation disturbances using steel sheets respectively having Si contents of 0.1 mass %, 1.1 mass %, and 1.7 mass %. In FIG. 6, the square points represent data for the steel sheet having a Si content of 0.1 mass %, the triangular points represent data for the steel sheet having a Si content of 1.1 mass %, and the circular and rhombic points represent data for the steel sheet having a Si content of 1.7 mass %. In this experiment, as in the experiment of FIG. 2, sheet assemblies, each consisting of two overlapping steel sheets of the same type, were prepared, and welding was performed under various welding conditions. The resulting welded members were subjected to measurement of LME cracking depth.

As shown in FIG. 6, LME cracking did not occur in any steel sheet when the pressure holding time was 200 ms or more. The data of FIG. 6 indicates that the pressure holding time required to prevent LME cracking tends to increase as the Si content of the steel sheet increases. This may be for the following reasons. In an Fe-Zn system phase diagram, Si reduces the solidus temperature at the same Zn concentration and shifts the solidus concentration toward the Fe side. Therefore, when a zinc-based coating on the surface of a steel sheet melts and Zn diffuses into the steel sheet during resistance spot welding, if the steel sheet has a high Si content, the steel sheet and liquid Zn will be in contact with each other for a long time until a lower temperature and a lower Zn concentration region, whereby LME cracking is more likely to occur.

The pressure holding time required to prevent LME cracking was shorter for a steel sheet having a Si content of 1.7 mass %, in which the thickness (tc) of the below-described decarburized layer was 0.1 mm and the amount (Os) of internal oxidation was 0.2 g/$m^2$ (see the rhombic points in FIG. 6), than for a steel sheet having a Si content of 1.7 mass %, and having no decarburized layer and no internal oxidation amount (see the circular points in FIG. 6). This may be because, as described above, when the amount of internal oxidation is large and the amount of dissolved Si in the surface of a steel sheet is small, the steel sheet and liquid Zn will be in contact with each other at a higher temperature for a shorter time.

An LME cracking evaluation experiment was conducted under various disturbances in the same manner as in the experiment of FIG. 3. The resulting data indicates the same tendency as the above-described data of FIG. 3, and therefore a description thereof is omitted.

As described above, LME cracking is likely to occur when the electrode holding time after completion of the application of current is short, while cold cracking is likely to occur when the electrode holding time after completion of the application of current is long. The presence/absence of either cracking varies, with the same electrode holding time, depending on the compositions and surface states of overlapping steel sheets and on welding operation disturbances. In addition, the degree of influence of the compositions and surface states of the steel sheets, and welding operation disturbances on the presence/absence of cracking differs between LME cracking and cold cracking. It has been found in the present invention that in order to prevent the two types of cracking that may occur in the surface of a steel sheet in a weld heat affected zone, it is important to optimize the electrode holding time after completion of the application of current depending on the compositions and surface states of overlapping steel sheets and on welding operation disturbances.

A description will now be given of conditions for optimizing the electrode holding time after completion of the application of current.

[Resistance Spot Welding Method]

An embodiment of the resistance spot welding method of the present invention will be described first.

The present invention is directed to a resistance spot welding method for joining a plurality of steel sheets together by clamping a sheet assembly, consisting of the plurality of overlapping steel sheets, between a pair of welding electrodes, and applying a current to the sheet assembly while applying pressure thereon with the welding electrodes. The method includes a step of holding the welding electrodes while keeping the pressure constant (the below-described holding step) after completion of the application of current (the below-described current application step).

The number of the "plurality of steel sheets" described above may be two or more, and there is no particular upper limit placed on the number of overlapping steel sheets. The number of the steel sheets is preferably five or less. Steel sheets for use in the present invention will be described later, and therefore is not described here.

A welding apparatus which includes a pair of upper and lower electrodes and can arbitrarily control a welding pressure and a welding current during welding, can be used in the resistance spot welding method of the present invention. The present invention can be applied to both DC and AC welding power sources. In the case of a single-phase AC, "current" means "effective current". The pressure mechanism, type, electrode shape, etc. of the welding apparatus are not particularly limited. Examples of the pressure mechanism include an air cylinder and a servo motor. Examples of the type of the welding apparatus include a stationary type and a robot gun. Examples of the type of an electrode tip include DR type (dome radius type), R diameter (radius type), and D type (dome type), described in JIS C 9304:1999. The tip diameter of the electrodes is, for example, 4 mm to 16 mm.

The respective steps of the resistance spot welding method of the present invention will now be described.

[Current Application Step]

A current application step is performed which involves melting the matching surfaces of overlapping steel sheets to form a weld. First, a plurality of steel sheets is stacked to form a sheet assembly. Subsequently, the sheet assembly is clamped between a pair of welding electrodes, disposed below and above the sheet assembly, and a current is applied to the sheet assembly while applying pressure thereon with the welding electrodes under predetermined and controlled welding conditions. A weld is formed in the matching-surface side of the overlapping steel sheets, thereby joining the steel sheets together.

The welding conditions in the current application step are not particularly specified. From the viewpoint of application to automotive parts, the following welding conditions are preferably used in the current application step. In particular, the current value, current application time, and pressure during the application of current may be constant, or may not necessarily be constant (i.e., may be variable).

In the former case, i.e., when welding is performed by single-stage current application, preferred ranges of the welding current value, the current application time, and the pressure during the application of current are as follows. The welding current value during the application of current is preferably, for example, not more than 10 kA and more than 2 kA. The current application time is preferably, for example, 100 ms to 1000 ms. The pressure during the application of current is preferably, for example, 2.0 kN to 10.0 kN.

In the latter case, i.e., when welding is performed by multi-stage current application, the welding current value and/or the welding pressure may be varied in two or more stages, or a cooling time may be provided between successive stages, or a control method may be used, without problem, which involves monitoring parameters such as resistance and voltage during welding, and changing the welding current value and/or the current application time during the application of current depending on a change in the parameters.

For example, in the case of a multi-stage current application step which includes a short-time pre-current application stage and a short-time post-current application stage before and after the main current application stage, the upper limit of the preferred welding current value during the application of current is extended from the above "10 kA" to 15 kA. Further, the upper limit of the preferred current application time is extended from the above "1000 ms" to 2000 ms. In the case of multi-stage current application, the current application time refers to the sum of the current application times of the respective stages. Thus, the welding current value during the application of current is preferably not more than 15 kA and more than 2 kA. The current application time is preferably 100 ms to 2000 ms. The pressure during the application of current is preferably, for example, 2.0 kN to 10.0 kN.

[Holding Step]

After the current application step is completed, a holding step is performed which involves holding the welding electrodes at a constant pressure.

In the holding step of the present invention, the welding electrodes are held such that a pressure holding time H (ms) after completion of the application of current satisfies X1max < H < X2min, where X1max is the maximum value of the calculated values X1 of the following formula (1) for each steel sheet, and X2min is the minimum value of the calculated values X2 of the following formula (2) for each steel sheet:

$$100 \times \{(C - tc) + (Si - 2 \times Os)/5 + Mn/40\} = X1 \qquad (1)$$

$$2000 - 600 \times \{(C - tc) + (Si - 2 \times Os)/20 + Mn/40\} = X2 \qquad (2)$$

where C (mass %), Si (mass %), and Mn (mass %) represent the C content, the Si content, and the Mn content of the steel sheet, tc (mm) represents the thickness of a decarburized layer per one surface of the steel sheet, and Os (g/$m^2$) represents the amount of internal oxidation per one surface of the steel sheet.

Formula (1) is provided for the following reasons.

As described in (i) to (iii) above, LME cracking is more likely to occur with increase in the amounts of alloying elements such as C, Si, and Mn. Therefore, increasing the pressure holding time after the application of current according to increase in the concentrations of C, Si, and Mn in a steel sheet is effective in reducing LME cracking. In addition, tensile stress, which acts as a driving force for LME cracking in the surface of a steel sheet on the side where steel sheets are in contact with each other, increases due to welding operation disturbances. Therefore, increasing the pressure holding time in the holding step after completion of the application of current according to the magnitude of a disturbance parameter D defined by the below-described formula (7) is even more effective in reducing LME cracking.

The effects of alloying elements on LME cracking cannot be explained simply because it is affected by a variety of complex factors; however, the following may explain the basic mechanism.

C is an element that promotes solid solution strengthening of a steel sheet. Therefore, when the C content of a steel sheet increases, the tensile stress after release from the electrodes increases in a region where compressive plastic deformation has occurred during the application of current. Accordingly, LME cracking is more likely to occur.

In an Fe-Zn system phase diagram, Si reduces the solidus temperature at the same Zn concentration and shifts the solidus concentration toward the Fe side. Therefore, when a zinc-based coating on the surface of a steel sheet melts and Zn diffuses into the steel sheet during resistance spot welding, if the steel sheet has a high Si content, the steel sheet and liquid Zn will be in contact with each other for a long time until a lower temperature and a lower Zn concentration region, whereby LME cracking is more likely to occur.

Mn is an element which, like C, promotes solid solution strengthening of a steel sheet. Therefore, an increase in the Mn content of a steel sheet increases the tensile stress after release from the electrodes, whereby LME cracking is more likely to occur. However, in a high temperature range where LME cracking occurs, the degree of solid solution strengthening by Mn is low as compared to C; therefore, the effect of Mn on tensile stress after release from the electrodes is small as compared to C.

Since LME cracking occurs in the surface layer of a steel sheet in contact with a molten low-melting metal, it is also affected by the concentration of an alloy element(s) dissolved in the surface layer of the steel sheet. When a decarburized layer is formed in the surface of the steel sheet, the C concentration in the surface of the steel sheet decreases. Therefore, an increase in the thickness of the decarburized layer in the surface of the steel sheet has the same effect of reducing LME cracking as a decrease in the C content of the steel sheet. Therefore, as the thickness of the decarburized layer increases, the lower limit of the pressure holding time after completion of the application of current, defined by formula (1), decreases. When internal oxidation occurs in the surface of the steel sheet, Si in the surface of the steel sheet is fixed as a Si oxide, and the amount of dissolved Si decreases. Therefore, an increase in the amount of internal oxidation in the surface of the steel sheet has the same effect of reducing LME cracking as a decrease in the Si content of the steel sheet. Therefore, as the amount of internal oxidation increases, the lower limit of the pressure holding time after completion of the application of current, defined by formula (1), decreases.

Formula (2) is provided for the following reasons.

As described in (iv) to (vi) above, as with LME cracking, cold cracking is more likely to occur with increase in alloying elements such as C, Si, and Mn. Therefore, reducing the pressure holding time after completion of the application of current according to increase in the concentrations of C, Si, and Mn in a steel sheet is effective in reducing cold cracking. In addition, tensile stress, which acts as a driving force for cold cracking in the surface of a steel sheet on the side where steel sheets are in contact with each other, increases due to welding operation disturbances. Therefore, reducing the pressure holding time after completion of the application of current according to the magnitude of a disturbance parameter D defined by the below-described formula (7) is even more effective in reducing cold cracking.

The effects of alloying elements on cold cracking cannot be explained simply because it is affected by a variety of complex factors; however, the following may explain the basic mechanism.

C is an element that greatly affects the hardness and toughness of martensite. As C increases, hard and brittle martensite is more likely to form, after completion of the application of current, in the vicinity of the surface of a steel sheet on the side where steel sheets are in contact with each other. In addition, C increases the tensile stress after release from the electrodes, and therefore cold cracking is more likely to occur.

Si suppresses precipitation of carbides after completion of martensite transformation. Therefore, as Si increases, hard and brittle martensite is more likely to form, after completion of the application of current, in the vicinity of the surface of a steel sheet on the side where steel sheets are in contact with each other.

Mn improves the hardenability of a steel sheet. Therefore, as Mn increases, hard and brittle martensite is more likely to form, after completion of the application of current, in the vicinity of the surface of a steel sheet on the side where steel sheets are in contact with each other.

Since cold cracking occurs from the surface of a steel sheet where it is in contact with the opposing steel sheet, cold cracking is affected also by the concentration of an alloy element(s) dissolved in the surface of the steel sheet. When a decarburized layer is formed in the surface of the steel sheet, the C concentration in the surface of the steel sheet decreases. Therefore, an increase in the thickness of the decarburized layer in the surface layer of the steel sheet has the same effect of reducing cold cracking as a decrease in the C content of the steel sheet. Therefore, as the thickness of the decarburized layer increases, the upper limit of the pressure holding time after completion of the application of current, defined by formula (2), increases. When internal oxidation occurs in the surface of the steel sheet, Si in the surface of the steel sheet is fixed as an Si oxide, and the amount of dissolved Si decreases. Therefore, an increase in the amount of internal oxidation in the surface of the steel sheet has the same effect of reducing cold cracking as a decrease in the Si content of the steel sheet. Therefore, as the amount of internal oxidation increases, the upper limit of the pressure holding time after completion of the application of current, defined by formula (2), increases.

The thickness of a decarburized layer per one surface of a steel sheet and the amount of internal oxidation per one surface of a steel sheet, used in the formulae, can be measured by the method described in the Examples below.

FIG. 7, which will be described later, shows an example of a steel sheet having a decarburized layer and an internally oxidized layer in one surface of the steel sheet. However, a steel sheet for use in the present invention may have a decarburized layer and an internally oxidized layer in both surfaces of the steel sheet. For example, when in welding of two overlapping steel sheets, a steel sheet is used which has a decarburized layer and an internally oxidized layer in both surfaces, with the thickness of the decarburized layer and the amount of internal oxidation being different between both surfaces, the thickness of the decarburized layer and the amount of internal oxidation in the surface of the steel sheet on the side where the steel sheets are in contact each other are measured, and the calculations of formulae (1) and (2) are performed using the measured values. When in welding of three or more overlapping steel sheets, both surfaces of a steel sheet, each having a decarburized layer and an internally oxidized layer, are each in contact with another steel sheet, the thickness of the decarburized layer and the amount of internal oxidation are measured for both surfaces of the steel sheet, and their maximum values are used to calculate formulae (1) and (2).

When the components, the thickness of a decarburized layer per one surface, and the amount of internal oxidation per one surface differ between a plurality of steel sheets for use in welding, it is necessary for the components, the thickness of a decarburized layer per one surface, and the amount of internal oxidation per one surface of each steel sheet to satisfy the relationship of formulae (1) and (2).

Thus, in the present invention, formulae (1) and (2) are provided as conditional expressions for optimizing the electrode holding time in the holding step after completion of the application of current, depending on the components and surface states of overlapping steel sheets. The electrode holding time (H) in the holding step satisfies the range (X1max < H < X2min) determined by the conditional expressions. If the electrode holding time (H) is not controlled within the numerical range, the above-described effects cannot be achieved, and LME cracking or cold cracking that occurs in the surface of a steel sheet in a weld heat affected zone on the side where steel sheets are in contact with each other cannot be prevented.

In order to more effectively achieve the above-described effects of the present invention, in addition to formulae (1) and (2), the following conditional expressions may be provided for the holding step as necessary.

In particular, in the holding step, the pressure holding time H (ms) preferably satisfies Y1max < H < Y2min, where Y1max is the maximum value of the calculated values Y1 of the following formula (3) for each steel sheet, and Y2min is the minimum value of the calculated values Y2 of the following formula (4) for each steel sheet:

$$(1 + 0.1 \times t_{all}) \times [100 \times \{(C - tc) + (Si - 2 \times Os)/5 + Mn/40\}] = Y1 \quad (3)$$

$$(1 - 0.8/t_{all}) \times [2000 - 600 \times \{(C - tc) + (Si - 2 \times Os)/20 + Mn/40\}] = Y2 \quad (4)$$

where C (mass %), Si (mass %), and Mn (mass %) represent the C content, the Si content, and the Mn content of the steel sheet, tc (mm) represents the thickness of a decarburized layer per one surface of the steel sheet, Os (g/m$^2$) represents the amount of internal oxidation per one surface of the steel sheet, and $t_{all}$ (mm) represents the sum of the thicknesses of the plurality of overlapping steel sheets.

Formulae (3) and (4) are provided for the following reasons.

The temperature at the time of release from the electrodes, which affects both LME cracking and cold cracking, depends on the sum of the thicknesses of the steel sheets: An increase in the sum of the thicknesses of the steel sheets reduces heat transfer from the steel sheets to the electrodes, leading to a higher temperature at the time of release from the electrodes. When the temperature of a steel sheet is high, liquid Zn is likely to be present in the steel sheet at the time of release from the electrodes, and therefore LME cracking is likely to occur. On the other hand, a decrease in the cooling rate after release from the electrodes promotes auto-tempering after martensite transformation, and therefore cold cracking is less likely to occur. Therefore, it is effective to increase the lower limit of the pressure holding time after completion of the application of current required to prevent LME cracking, defined by formula (3), and also increase the upper limit of the pressure holding time after completion of the application of current required to prevent cold cracking, defined by formula (4), according to increase in the sum $t_{all}$ (mm) of the thicknesses of the overlapping steel sheets.

Therefore, it is preferred that the electrode holding time (H) in the holding step of the present invention be set to a value that not only satisfies the range determined by the above-described conditional expressions, formulae (1) and (2), but satisfies the range (Y1max < H < Y2min) determined by formulae (3) and (4).

<Welding Operation Disturbance>

In the present invention, in order to further optimize the electrode holding time (H), it is preferred to consider welding operation disturbances in addition to the compositions and surface states of overlapping steel sheets. The following formulae (5), (6), (8), and (9) are conditional expressions that take welding operation disturbances into consideration in the above-described formulae (1) to (4). The reasons for the provision of each conditional expression have already been described, and therefore a description thereof will be omitted.

In particular, in the holding step, the welding electrodes are held such that a pressure holding time H (ms) satisfies X1'max < H < X2'min, where X1'max is the maximum value of the calculated values X1' of the following formula (5) for each steel sheet, and X2'min is the minimum value of the calculated values X2' of the following formula (6) for each steel sheet:

$$100 \times \{(C - tc) + (Si - 2 \times Os)/5 + Mn/40\} + D = X1' \quad (5)$$

$$2000 - 600 \times \{(C - tc) + (Si - 2 \times Os)/20 + Mn/40\} - 5 \times D = X2' \quad (6)$$

where C (mass %), Si (mass %), and Mn (mass %) represent the C content, the Si content, and the Mn content of the steel sheet, tc (mm) represents the thickness of a decarburized layer per one surface of the steel sheet, and Os (g/m$^2$) represents the amount of internal oxidation per one surface of the steel sheet.

In formulae (5) and (6), D represents a disturbance parameter determined by the following formula (7):

$$D = 5 \times A + 5 \times M + 5 \times CL + 2 \times G \qquad (7)$$

where A represents the angle (degree) of inclination of the welding electrodes to the overlapping steel sheets, M represents a misalignment (mm) between the welding electrodes, CL represents the maximum value (mm) of the gap between a welding electrode and the overlapping steel sheets, and G represents the maximum value (mm) of the gap between at least one pair of steel sheets of the overlapping steel sheets. The welding operation disturbances A, M, CL, and G in formula (7) are determined immediately before applying pressure to the steel sheets with the welding electrodes. When no such welding operation disturbances occur, the value of the disturbance parameter D is 0.

In order to more effectively achieve the above-described effects of the present invention, in addition to formulae (5) and (6), the following conditional expressions may be provided for the holding step as necessary.

In particular, in the holding step, the pressure holding time H (ms) preferably satisfies Y1'max < H < Y2'min, where Y1'max is the maximum value of the calculated values Y1' of the following formula (8) for each steel sheet, and Y2'min is the minimum value of the calculated values Y2' of the following formula (9) for each steel sheet:

$$(1 + 0.1 \times t_{all}) \times [100 \times \{(C - tc) + (Si - 2 \times Os)/5 + Mn/40\} + D] = Y1' \qquad (8)$$

$$(1 - 0.8/t_{all}) \times [2000 - 600 \times \{(C - tc) + (Si - 2 \times Os)/20 + Mn/40\} - 5 \times D] = Y2' \qquad (9)$$

where C (mass %), Si (mass %), and Mn (mass %) represent the C content, the Si content, and the Mn content of the steel sheet, tc (mm) represents the thickness of a decarburized layer per one surface of the steel sheet, Os (g/m$^2$) represents the amount of internal oxidation per one surface of the steel sheet, and $t_{all}$ (mm) represents the sum of the thicknesses of the plurality of overlapping steel sheets.

The welding operation disturbances (A, M, CL, and G) in the disturbance parameter of formula (7) will now be described in detail.

(a) A: Angle (Degree) of Inclination of Welding Electrodes to Overlapping Steel Sheets

The electrode inclination angle refers to the angle of inclination of the welding electrodes to the steel sheets, i.e., the "angle between the electrode pressure direction and the thickness direction of the steel sheets". When the electrode inclination angle is large, bending stress is applied to a weld, and a large compressive plastic deformation will occur locally, increasing the tensile stress after release from the electrodes. Therefore, LME cracking and cold cracking are likely to occur. The effects of the present invention can be effectively achieved when the electrode inclination angle is 0.2 degrees or more. If the electrode inclination angle is too large, the formation of a nugget will be unstable, causing splash. Therefore, the electrode inclination angle is preferably 10 degrees or less. The electrode inclination angle is more preferably not less than 1 degree and not more than 8 degrees.

(b) M: Amount of Misalignment Between Welding Electrodes (mm)

The misalignment between welding electrodes refers to misalignment between the central axes of a pair of welding electrodes. As with the electrode inclination angle described above, when the misalignment is large, bending stress is applied to a weld, whereby LME cracking and cold cracking are likely to occur. The effects of the present invention can be effectively achieved when the amount of the misalignment is 0.1 mm or more. If the amount of the misalignment is too large, the formation of a nugget will be unstable, causing splash. Therefore, the amount of the misalignment is preferably 5 mm or less. The amount of the misalignment is more preferably not less than 0.2 mm and not more than 3 mm.

(c) CL: Maximum Value (mm) of the Gap Between a Welding Electrode and Overlapping Steel Sheets

When there is a gap between a welding electrode and a steel sheet immediately before the start of the application of pressure, for example, when one of the welding electrodes is movable (movable electrode) and the other welding electrode is fixed (fixed electrode) and there is a gap between the fixed electrode and the opposing steel sheet, the application of pressure by the movable electrode is started. As a result, a bending deformation occurs in the steel sheet, and bending stress is applied to a weld, and therefore LME cracking and cold cracking are likely to occur. The effects of the present invention can be effectively achieved when the amount (maximum value) of the gap is 0.5 mm or more. If the amount of the gap is too large, the formation of a nugget will be unstable, causing splash. Therefore, the amount of the gap is preferably 5 mm or less. The amount of the gap is more preferably not less than 1 mm and not more than 3 mm.

(d) G: Maximum Value (mm) of the Gap Between at Least One Pair of Steel Sheets of the Overlapping Steel Sheets

As with the above-described gap (c), if there is a gap between steel sheets immediately before the start of the application of pressure, a bending deformation will occur in a steel sheet, and bending stress will be applied to a weld. Therefore, LME cracking and cold cracking are likely to occur. The effects of the present invention can be effectively achieved when the maximum value of the amount of the gap is 0.5 mm or more. If the amount of the gap is too large, the formation of a nugget will be unstable, causing splash. Therefore, the maximum value of the amount of the gap is preferably 4 mm or less. The maximum value of the amount of the gap is more preferably not less than 1 mm and not more than 3 mm. The "gap between at least one pair of steel sheets" means that there is a gap between at least one pair of two vertically adjacent steel sheets of the overlapping two or more steel sheets.

For the above reasons, increasing the pressure holding time after completion of the application of current according to the magnitude of the disturbance parameter D is effective in reducing LME cracking and cold cracking.

<Welding Spots>

In the present invention, in addition to the above-described conditions, it is desirable to control welding spots during the current application step. Welding spots will be described with reference to FIGS. 8 and 9.

As shown in FIGS. 8 and 9, during the application of current, the distance Le from the center of a welding spot to an end surface of a steel sheet is preferably more than 3.0 mm. Further, when there are one or more welded spots around the welding spot, the center-to-center distance Lp between the welding spot and a welded spot closest to the welding spot is preferably 6.0 mm or more.

As shown in FIG. 8, the "distance (Le) from the center of a welding spot to an end surface of a steel sheet" refers to the distance from the center of a welding spot 8 to the closest end surface of a steel sheet. As shown in FIG. 9, the "center-to-center distance (Lp) between the welding spot and a welded spot closest to the welding spot" refers to the center-to-center distance between adjacent welding spots (welding spot 8 and welded spot 9).

FIGS. 8 and 9 are top views showing an area around a weld(s) in a welded member 10 (i.e., diagrams of the welded member as viewed from above).

If the distance (Le) from the center of a welding spot to an end surface of a steel sheet is 3.0 mm or less, the occurrence of splash will be significant, and LME cracking is likely to occur. No upper limit is placed on the distance (Le). If the distance (Le) is large, welding itself may be difficult with a small welding gun, causing an equipment constraint of the necessity of a large welding gun. Therefore, the distance (Le) is preferably made 200 mm or less.

If the center-to-center distance (Lp) between a welding spot and a welded spot closest to the welding spot is less than 6.0 mm, the welding spot will be restrained by the welded spot, resulting in increased residual stress. Therefore, LME cracking and cold cracking are likely to occur. No upper limit is placed on the distance (Lp). In order to ensure the strength and rigidity of a welded member, the distance (Lp) is preferably made 200 mm or less.

<Steel Sheets for Use in Sheet Assembly>

Examples of steel sheets for use in the present invention include a cold-rolled steel sheet, and a surface-treated steel sheet having a metal coating layer on the surface of a steel sheet. For example, all the steel sheets of a sheet assembly may be cold-rolled steel sheets, or all the steel sheets of a sheet assembly may be surface-treated steel sheets, or the steel sheets of a sheet assembly may consist of a cold-rolled steel sheet(s) and a surface-treated steel sheet(s). Such a steel sheet will now be described.

[Thickness of Steel Sheet]

The thickness of each steel sheet included in the sheet assembly of the present invention is not particularly limited. For example, the thickness is preferably 0.5 mm to 6.0 mm from the viewpoint of application to automotive parts.

[Tensile Strength of Steel Sheet]

The tensile strength of each steel sheet included in the sheet assembly of the present invention is not particularly limited; for example, it is 250 MPa to 2500 MPa. Cracking is more likely to occur when the tensile strength of a sheet assembly is high. Therefore, the cracking suppression effect can be more effectively achieved by applying the present invention to a sheet assembly in which at least one of the steel sheets has a tensile strength of 590 MPa or more. In particular, a greater effect can be achieved when at least one of the steel sheets of a sheet assembly has a tensile strength of 780 MPa or more.

[Chemical Composition of Steel Sheet]

The components of each steel sheet included in the sheet assembly of the present invention are not particularly limited. From the viewpoint of using a steel sheet(s) having a tensile strength in the above-described range, it is preferred that, for example, at least one of the steel sheets of a sheet assembly have the following chemical composition. In this case, the effects of the present invention can be achieved more effectively. In the following description of the chemical composition, "%" refers to "mass %" unless otherwise specified.
The chemical composition of a steel sheet preferably comprises, in mass %, C: 0.04 to 0.50%, Si: 0.01 to 2.50%, Mn: 1.00 to 5.00%, P: 0.05% or less, S: 0.01% or less, and Al: 0.01 to 0.30%.

C: 0.04 to 0.50%

C is an element that contributes to increasing the strength of the steel sheet. The C content is preferably 0.04% or more. On the other hand, excessive addition of C causes excessive hardening of a weld, resulting in a reduction in the toughness of the weld. The C content is preferably 0.50% or less.

Si: 0.01 to 2.50%

Si is an element that is effective in improving the strength and elongation of the steel sheet. The Si content is preferably 0.01% or more. On the other hand, excessive addition of Si causes a deterioration of LME resistance and coatability. The Si content is preferably 2.50% or less.

Mn: 1.00 to 5.00%

Mn is an element that contributes to increasing the strength of the steel sheet. The Mn content is preferably 1.00% or more. On the other hand, excessive addition of Mn promotes solidification and segregation of alloy elements in a nugget, causing a deterioration of the toughness of the weld. The Mn content is preferably 5.00% or less. The Mn content is more preferably less than 3.00%.

P: 0.05% or less

Excessive addition of P causes a deterioration of the toughness of a weld due to solidification and segregation of the nugget. The P content is preferably 0.05% or less. While the lower limit of the P content is not particularly limited, the P content is preferably 0.005% or more because a too-low P content increases the steelmaking cost.

S: 0.01% or less

S causes a deterioration of the toughness of a weld due to solidification and segregation in the nugget. The S content is preferably 0.01% or less. While the lower limit of the S content is not particularly limited, the S content is preferably 0.0002% or more because a too-low S content increases the steelmaking cost.

Al: 0.01 to 0.30%

Al is an element necessary for deoxidization. In order to achieve this effect, the Al content is preferably 0.01% or more. On the other hand, excessive addition of Al increases the amount of inclusions in the steel sheet, resulting in a reduction in local deformability and a reduction in the ductility of the steel sheet. The Al content is preferably 0.30% or less.
In addition to the above-described components, the composition may contain one or more optional elements, selected from Ti, B, Cr, Ni, Mo, W, V, Nb, Cu, Sb, Ca, REM (rare earth elements), N, and O, in a total amount of 10% or less, as necessary. The composition can contain such a component(s) as necessary; thus, the content of each such component may be 0%.
The use of the above-described optional elements in a total amount exceeding 10% excessively increases the alloy addition cost and causes various problems such as embrittlement of the steel sheet and deterioration of weldability. When such an optional element(s) is included in the composition, the total content is preferably 0.1% or more.
The balance of the composition is Fe and incidental impurities.

A hot-pressed steel sheet or a hot-rolled steel sheet can also be used, without problem, in a steel assembly for use in the present invention.

[Surface of Steel Sheet]

Each steel sheet included in the sheet assembly of the present invention may or may not have a decarburized layer and an internally oxidized Si layer in the surface of the steel sheet.

It is known that as the amount of C in steel increases, LME cracking is more likely to occur. Therefore, as shown in FIG. 7, it is preferred to use, for example, a steel sheet having a decarburized layer 13 in the surface of the steel sheet, the decarburized layer 13 internally including an internally oxidized Si layer 14. The LME cracking reduction effect can be more effectively achieved by using a steel sheet having such a decarburized layer and an internally oxidized Si layer.

The decarburized layer of such a steel sheet can be formed as an outermost surface layer by increasing the dew point during annealing in the production of the steel sheet. The thickness of the decarburized layer is not particularly limited. If the thickness of the decarburized layer is too large, the tensile strength of the steel sheet is low. From the viewpoint of making the tensile strength within the above-described range, the thickness (tc) of the decarburized layer per one surface of the steel sheet is preferably 0.20 mm or less. The thickness (tc) of the decarburized layer is preferably 0.01 mm or more.

It is known that as the amount of Si in steel increases, LME cracking is more likely to occur. Therefore, as shown in FIG. 7, it is preferred to use, for example, a steel sheet having a decarburized layer 13 which internally includes an internally oxidized Si layer 14. The use of such a steel sheet can more effectively achieve the LME cracking reduction effect. The internally oxidized Si layer of such a steel sheet can be formed as an outermost surface layer by increasing the dew point during annealing in the production of the steel sheet. The cold cracking reduction effect can also be achieved more effectively as described above.

The "internally oxidized Si layer" described above specifically refers to a region where a Si oxide is formed in part of crystal grains and/or grain boundaries.

There is no particular limitation on the amount of internal oxidation. If the amount of internal oxidation is too large, the bendability of the steel sheet will deteriorate; therefore, the amount of internal oxidation (Os) per one surface of the steel sheet is preferably 1.0 $g/m^2$ or less. The amount of internal oxidation (Os) is preferably 0.1 $g/m^2$ or more.

[Metal Coating Layer on the Surface of Steel Sheet]

When a surface-treated steel sheet having a metal coating layer is used as a steel sheet included in the sheet assembly of the present invention, the composition of the metal coating layer is also arbitrary.

Since LME cracking is caused in part by melting of a metal coating layer having a low melting point, the effect of suppressing cracking in a weld is greater for a steel sheet having a metal coating layer whose melting point is lower than the base material. In the present invention, from the viewpoint of application to automotive parts, the melting point of the base material (base steel sheet) is preferably, for example, 1400 to 1570°C, and the melting point of the metal coating layer is preferably, for example, 300 to 1200°C.

The metal coating layer having the above-described melting point may be, for example, a Zn-based coating layer or an Al-based coating layer. Zn-based coating is superior to Al-based coating for a welded member which requires corrosion resistance. This is because the sacrificial anticorrosive action of zinc (Zn) can reduce the corrosion rate of the base steel sheet. Examples of Zn-based coating include hot-dip galvanization (GI), galvannealing (GA), electrogalvanizing (EG), Zn-Ni-based coating (e.g., Zn-Ni-based coating containing 10 to 25 mass % of Ni), Zn-Al-based coating, Zn-Mg-based coating, and Zn-Al-Mg-based coating. Al-Si-based coating (e.g., Al-Si-based coating containing 10 to 20 mass % of Si) is an example of Al-based coating.

While the coating amount of the metal coating layer is also arbitrary, the coating amount per one surface of the steel sheet is preferably 120 $g/m^2$ or less from the viewpoint of weldability. While the lower limit of the coating amount of the metal coating layer per one surface of the steel sheet is not particularly limited, the coating amount is preferably 20 $g/m^2$ or more from the viewpoint of ensuring rust prevention.

As shown in FIG. 7, the steel sheet having a metal coating layer may have an Fe-based pre-coating layer 12 between the metal coating layer 11 and the steel substrate of the steel sheet. The pre-coating layer is preferably an Fe-based electroplating layer. Examples of the Fe-based electroplating layer include, besides a pure Fe plating layer, alloy plating layers such as Fe-B alloy, Fe-C alloy, Fe-P alloy, Fe-N alloy, Fe-O alloy, Fe-Ni alloy, Fe-Mn alloy, Fe-Mo alloy, and Fe-W alloy. The chemical composition of the Fe-based electroplating layer is not particularly limited. In the present invention, the chemical composition preferably comprises one or more elements selected from the group consisting of B, C, P, N, O, Ni, Mn, Mo, Zn, W, Pb, Sn, Cr, V, and Co in a total amount of 10 mass % or less, with the balance being Fe and incidental impurities. By making the total amount of elements other than Fe not more than 10 mass %, a reduction in electrolysis efficiency can be prevented, and the Fe-based electroplating layer can be formed at low cost.

In the present invention, the sheet assembly is not particularly limited. For example, the sheet assembly may consist of a plurality of overlapping steel sheets of the same type, or a plurality of overlapping steel sheets of different types. The steel sheets of the sheet assembly may have different thicknesses without problem. The sheet assembly may consist of a combination of a steel sheet(s) having a metal coating layer whose melting point is lower than the steel sheet, and a steel sheet(s) having no metal coating layer. Preferably, at least one of the steel sheets of the sheet assembly is a galvannealed steel sheet.

Unlike LME cracking, cold cracking can occur even when a surface-treated steel sheet having a metal coating layer is not used in the sheet assembly. Thus, even when none of the steel sheets of the sheet assembly have a metal coating layer, the effects of the present invention can be effectively achieved as long as the above-described conditions are satisfied.

An embodiment of the welded member production method of the present invention will now be described. This embodiment illustrates a method for producing a welded member, consisting of a plurality of resistance-spot-welded steel sheets, using the above-described resistance spot welding method of the present invention.

[Welded Member Production Method]

In the welded member production method of the present invention, a welded member can be produced through a production process which includes a first step of stacking a plurality of steel sheets to obtain a sheet assembly, and a second step of resistance-spot-welding the sheet assembly by the above-described resistance spot welding method.

<First Step>

In this step, two or more steel sheets are prepared, and the steel sheets are stacked vertically to form a sheet assembly. The steel sheets included in the sheet assembly have already been described above, and therefore a description thereof will be omitted. Next, a second step is performed.

<Second step>

In the second step, the steel sheets of the sheet assembly prepared in the first step are joined together. In this step, the sheet assembly is clamped between a pair of welding electrodes disposed below and above the sheet assembly and, while applying pressure to the sheet assembly, a current application step and a holding step are performed based on the above-described resistance spot welding method to form welds between the steel sheets, thereby joining the steel sheets together.

When welding is performed using the above-described resistance spot welding method of the present invention, the occurrence of cracking in a weld can be suppressed. Therefore, according to the production method of the present invention, a welded member with reduced cracking in welds can be produced.

EXAMPLES

The operation and effects of the present invention will now be described using examples. It should be noted that the present invention is not limited to the following examples.

Using the sheet assemblies shown in Table 1, welded joints (welded members) were produced under the welding conditions shown in Table 2. Each sheet assembly was obtained by stacking a steel sheet 1, a steel sheet 2, and a steel sheet 3, shown in Table 1, in vertically descending order. The "none" in the "Coating type" columns in Table 1 indicates a steel sheet (cold-rolled steel sheet) that does not have the above-described metal coating layer. The symbols in the "State immediately before application of pressure" column in Table 2 correspond to those described in (a) to (d) above with reference to the welding operation disturbances. A resistance welding machine, composed of a servo motor pressure-type welding gun and a DC inverter-type welding power source, was used as a welding apparatus. A pair of electrode tips, which were DR-type electrodes of chromium copper having a tip curvature radius R of 40 mm and a tip diameter of 6 mm, were used.

The "Tensile strength" columns in Table 1 show tensile strength values (MPa) each measured according to JIS Z 2241 for a JIS No. 5 tensile test specimen which had been taken from a steel sheet in the rolling direction.

The "Thickness of decarburized layer in the surface of steel sheet" columns in Table 1 show values for the thickness (tc) (mm) of a decarburized layer per one surface of a steel sheet. Each value was based on the carbon content of a steel sheet, which was measured as follows: The steel sheet was cut by a micro-cutter, and the cross-section of the steel sheet was subjected to electron-beam microanalysis according to JIS G 0558. From the viewpoint of measurement accuracy, when tc was less than 0.010 mm, the tc was described as 0 mm in Table 1, and the value was used in the calculations of formulae (1) to (4).

The "Amount of internal oxidation in the surface of steel sheet" columns in Table 1 show values for the amount of oxygen (Os) ($g/m^2$) per unit area of one surface of a steel sheet, which was determined by the following method: For each of the steel sheets (cold-rolled steel sheets) having no metal coating layer, a pickling treatment was performed in 5 mass % HCl to remove an external oxide on the surface of the steel sheet. For each of the steel sheets (GI steel sheets, GA steel sheets, EG steel sheets, etc.) having a metal coating layer, a treatment to dissolve the zinc coating layer was performed in an aqueous 20 mass % NaOH solution containing triethanolamine. Thereafter, Os, the amount of oxygen per unit area of one surface of the steel sheet, was measured by a fusion-infrared absorption method. From the viewpoint of measurement accuracy, when Os was less than 0.001 $g/m^2$, the Os was described as 0 $g/m^2$ in Table 1, and the value was used in the calculations of formulae (1) to (4).

The "Total sheet thickness" column in Table 2 shows values for the total sheet thickness ($t_{all}$) (mm) of a sheet assembly, i.e., the sum of the thicknesses of steel sheets, measured before welding.

The "Shortest distance Le" column in Table 2 shows measured values for the shortest distance Le (mm) from the center of a welding spot 8 to the end surface of a steel sheet, as shown in FIG. 8.

In some examples, as shown in FIG. 9, welding was performed when there was one welded spot 9 around a welding spot 8. For these examples, the "Center-to-center distance Lp between welding spot and welded spot" column in Table 2 shows the results of measurement of the center-to-center distance Lp (mm) between the welding spot 8 and the welded spot 9. The welding conditions for evaluation welding (welding spot 8) and those for previous welding (welded spot 9) were the same. In the "Center-to-center distance Lp between welding spot and welded spot" column in Table 2, "none" indicates absence of a welded spot around a welding spot to be evaluated. The phrase "absence of a welded spot around a welding spot to be evaluated" includes cases where a welded spot, which was adjacent to a welding spot, was located so distant from the welding spot that it would exert no influence on welding at the welding spot.

The presence or absence of LME cracking and cold cracking was evaluated by the following method.

The center of a weld of each of the welded joints obtained was cut with a micro-cutter, and then the cross-section of the weld was observed. Based on the observation results, the presence or absence of cracking was evaluated according to the following criteria. In particular, 10 welded joints were produced under the respective welding conditions shown in Table 2. For each welded joint, cross-sectional observation was performed on the matching-surface side of a weld heat affected zone to check LME cracking and cold cracking.

<Evaluation Criteria>

A: No cracking occurred in any of the 10 joints
B: Cracking occurred in 2 or less joints, and the maximum cracking depth was less than 100 μm
C: Cracking occurred in 3 joints, and the maximum cracking depth was less than 100 μm
D: Cracking occurred in 4 joints, and the maximum cracking depth was less than 100 μm
F: Cracking occurred in 5 or more joints, or the maximum cracking depth was 100 μm or more

Joints rated A, B, C, or D were evaluated as acceptable.

The values and evaluation results obtained are shown in Table 2. As shown in Table 2, all of the inventive examples were rated A, B, C, or D. The results indicate that according to the present invention, it is possible to reduce both LME cracking and cold cracking in the overlapping-surfaces side a weld heat affected zone on the side where steel sheets are in contact with each other.

[Table 1]

| Sheet assembly No. | Steel sheet 1 | | | | | | | | Steel sheet 2 | | | | | | | | Steel sheet 3 | | | | | | | |
|---|---|---|---|---|---|---|---|---|---|---|---|---|---|---|---|---|---|---|---|---|---|---|---|---|
| | Thick-ness (mm) | Tensile strength (MPa) | C cont. (mass %) | Si cont. (mass %) | Mn cont. (mass %) | Thickness of decarburized layer in the surface of steel sheet tc (mm) | Amount of internal oxidation in the surface of steel sheet Os (g/m²) | Coating type | Thick-ness (mm) | Tensile strength (MPa) | C cont. (mass %) | Si cont. (mass %) | Mn cont. (mass %) | Thickness of decarburized layer in the surface of steel sheet tc (mm) | Amount of internal oxidation in the surface of steel sheet Os (g/m²) | Coating type | Thick-ness (mm) | Tensile strength (MPa) | C cont. (mass %) | Si cont. (mass %) | Mn cont. (mass %) | Thickness of decarburized layer in the surface of steel sheet tc (mm) | Amount of internal oxidation in the surface of steel sheet Os (g/m²) | Coating type |
| a1 | 1.4 | 1020 | 0.20 | 1.40 | 2.20 | 0 | 0 | GA | 1.4 | 1020 | 0.20 | 1.40 | 2.20 | 0 | 0 | GA | | | | | | | | |
| a2 | 1.4 | 1020 | 0.20 | 1.40 | 2.20 | 0 | 0 | GA | 1.4 | 1020 | 0.20 | 1.40 | 2.20 | 0 | 0 | GA | | | | | | | | |
| a3 | 1.4 | 1020 | 0.20 | 1.40 | 2.20 | 0 | 0 | GI | 1.4 | 1020 | 0.20 | 1.40 | 2.20 | 0 | 0 | GI | | | | | | | | |
| a4 | 1.4 | 1020 | 0.20 | 1.40 | 2.20 | 0 | 0 | EG | 1.4 | 1020 | 0.20 | 1.40 | 2.20 | 0 | 0 | EG | | | | | | | | |
| a5 | 2.0 | 1210 | 0.10 | 0.75 | 1.50 | 0 | 0 | none | 2.0 | 1210 | 0.10 | 0.75 | 1.50 | 0 | 0 | none | | | | | | | | |
| a6 | 1.6 | 1010 | 0.12 | 0.50 | 2.00 | 0 | 0 | GA | 1.6 | 1520 | 0.30 | 0.20 | 2.00 | 0 | 0 | none | | | | | | | | |
| a7 | 1.2 | 1220 | 0.22 | 1.80 | 2.50 | 0 | 0 | GA | 1.2 | 1220 | 0.22 | 1.80 | 2.50 | 0 | 0 | GA | | | | | | | | |
| a8 | 1.8 | 1030 | 0.10 | 1.00 | 2.00 | 0 | 0 | GA | 1.4 | 2010 | 0.40 | 0.30 | 1.50 | 0 | 0 | none | | | | | | | | |
| a9 | 0.6 | 280 | 0.01 | 0.01 | 0.12 | 0 | 0 | GA | 1.6 | 990 | 0.20 | 1.00 | 2.00 | 0 | 0 | GA | 1.6 | 1190 | 0.10 | 1.40 | 2.00 | 0 | 0 | GA |
| a10 | 1.4 | 1020 | 0.20 | 1.40 | 2.20 | 0.20 | 0.20 | GA | 1.4 | 1020 | 0.20 | 1.40 | 2.20 | 0.20 | 0.20 | GA | | | | | | | | |
| a11 | 2.0 | 1210 | 0.10 | 0.75 | 1.50 | 0.02 | 0.10 | none | 2.0 | 1210 | 0.10 | 0.75 | 1.50 | 0.02 | 0.10 | none | | | | | | | | |
| a12 | 1.6 | 1010 | 0.12 | 0.50 | 2.00 | 0 | 0 | GA | 1.6 | 1520 | 0.30 | 0.20 | 2.00 | 0.07 | 0.10 | none | | | | | | | | |
| a13 | 1.2 | 1220 | 0.22 | 1.80 | 2.50 | 0.10 | 0.10 | GA | 1.2 | 1220 | 0.22 | 1.80 | 2.50 | 0.10 | 0.10 | GA | | | | | | | | |
| a14 | 1.8 | 1030 | 0.10 | 1.00 | 2.00 | 0.02 | 0.60 | GA | 1.4 | 2010 | 0.40 | 0.30 | 1.50 | 0.10 | 0.12 | none | | | | | | | | |
| a15 | 0.6 | 280 | 0.01 | 0.01 | 0.12 | 0 | 0 | GA | 1.6 | 990 | 0.20 | 1.00 | 2.00 | 0.10 | 0.20 | GA | 1.6 | 1190 | 0.10 | 1.40 | 2.00 | 0.01 | 0.80 | GA |
| a16 | 1.4 | 1020 | 0.20 | 1.40 | 2.20 | 0 | 0 | GA | 1.4 | 1020 | 0.20 | 1.40 | 2.20 | 0 | 0 | GA | | | | | | | | |
| a17 | 2.0 | 1210 | 0.10 | 0.75 | 1.50 | 0 | 0 | none | 2.0 | 1210 | 0.10 | 0.75 | 1.50 | 0 | 0 | none | | | | | | | | |
| a18 | 1.4 | 1020 | 0.20 | 1.40 | 2.20 | 0 | 0 | GA | 1.4 | 1020 | 0.20 | 1.40 | 2.20 | 0 | 0 | GA | | | | | | | | |
| a19 | 1.4 | 1020 | 0.20 | 1.40 | 2.20 | 0 | 0 | GA | 1.4 | 1020 | 0.20 | 1.40 | 2.20 | 0 | 0 | GA | | | | | | | | |
| a20 | 1.4 | 1020 | 0.20 | 1.40 | 2.20 | 0 | 0 | GA | 1.4 | 1020 | 0.20 | 1.40 | 2.20 | 0 | 0 | GA | | | | | | | | |
| a21 | 1.4 | 1020 | 0.20 | 1.40 | 2.20 | 0 | 0 | GA | 1.4 | 1020 | 0.20 | 1.40 | 2.20 | 0 | 0 | GA | | | | | | | | |
| a22 | 1.4 | 1510 | 0.25 | 1.00 | 2.00 | 0.08 | 0.10 | GA | 1.4 | 1510 | 0.25 | 1.00 | 2.00 | 0.08 | 0.10 | GA | | | | | | | | |
| a23 | 1.6 | 1030 | 0.10 | 0.50 | 1.20 | 0 | 0 | GA | 1.4 | 2010 | 0.34 | 0.10 | 1.20 | 0 | 0 | GA-H | | | | | | | | |
| a24 | 1.6 | 1530 | 0.25 | 1.00 | 2.00 | 0.10 | 0.20 | GA | 1.4 | 1210 | 0.10 | 0.50 | 2.70 | 0 | 0 | GA | | | | | | | | |
| a25 | 1.6 | 440 | 0.05 | 0.50 | 2.00 | 0 | 0 | GA | 1.8 | 1010 | 0.10 | 0.50 | 2.70 | 0 | 0 | GA | 2.0 | 1050 | 0.20 | 1.00 | 2.00 | 0.07 | 0.30 | GA |

*GA: galvannealing
*GI: hot-dip galvanization
*EG: electrogalvanizing
*GA-H: galvannealed hot-stamped steel sheet

[Table 2]

| Condition No. | Sheet Assembly No. | Total thickness $t_{all}$ (mm) | State immediately before application of pressure | | | | | Welding conditions | | | | | | | | | | | | Results | Remarks |
|---|---|---|---|---|---|---|---|---|---|---|---|---|---|---|---|---|---|---|---|---|---|
| | | | (a) | (b) | (c) | (d) | | Current application step | | | | | Holding step | | | | | | | | |
| | | | Electrode inclination angle A (degree) | Misalignment between welding electrodes M (mm) | Gap between welding electrode and steel sheet CL (mm) | Gap between steel sheets G (mm) | Disturbance parameter D *5 | Shortest distance Le (mm) | Center-to-center distance between welding spot and welded spot Lp (mm) | Pressure (kN) | Welding current (kA) | Current application time (ms) | Pressure holding time after completion of application of current H (ms) | Form. (1) X1max (lower limit) *1 | Form. (2) X2min (upper limit) *2 | X1max<H <X2min satisfied? | Form. (3) Y1max (lower limit) *3 | Form. (4) Y2min (upper limit) *4 | Y1max<H <Y2min satisfied? | | |
| 1 | a1 | 2.8 | 0 | 0 | 0 | 0 | 0 | 15.0 | none | 4.0 | 7.0 | 250 | 120 | 54 | 1805 | ○ | 68 | 1289 | ○ | A | Inventive Ex. |
| 2 | a2 | 2.8 | 5 | 0 | 0 | 0 | 25 | 15.0 | none | 4.0 | 7.0 | 250 | 120 | 54 | 1805 | ○ | 68 | 1289 | ○ | A | Inventive Ex. |
| 3 | a3 | 2.8 | 0 | 0 | 1 | 0 | 5 | 200.0 | none | 4.0 | 7.0 | 250 | 1100 | 54 | 1805 | ○ | 68 | 1289 | ○ | A | Inventive Ex. |
| 4 | a4 | 2.8 | 0 | 0 | 0 | 2 | 4 | 4.0 | none | 4.0 | 7.0 | 250 | 500 | 54 | 1805 | ○ | 68 | 1289 | ○ | A | Inventive Ex. |
| 5 | a5 | 4.0 | 5 | 0 | 0 | 0 | 25 | 15.0 | none | 5.0 | 8.0 | 330 | 1300 | 29 | 1895 | ○ | 40 | 1516 | ○ | A | Inventive Ex. |
| 6 | a6 | 3.2 | 5 | 0 | 2 | 1 | 37 | 15.0 | none | 4.0 | 6.0 | 260 | 120 | 39 | 1784 | ○ | 51 | 1338 | ○ | A | Inventive Ex. |
| 7 | a7 | 2.4 | 0 | 2 | 0 | 0 | 10 | 15.0 | 7.0 | 3.5 | 7.0 | 200 | 1000 | 64 | 1777 | ○ | 80 | 1184 | ○ | A | Inventive Ex. |
| 8 | a8 | 3.2 | 0 | 0 | 2 | 0 | 10 | 15.0 | none | 4.0 | 7.0 | 300 | 200 | 50 | 1729 | ○ | 66 | 1296 | ○ | A | Inventive Ex. |
| 9 | a9 | 3.8 | 7 | 0 | 0 | 0 | 35 | 15.0 | none | 5.0 | 7.0 | 500 | 140 | 45 | 1820 | ○ | 62 | 1437 | ○ | A | Inventive Ex. |
| 10 | a10 | 2.8 | 5 | 0 | 0 | 0 | 25 | 15.0 | none | 4.0 | 7.0 | 250 | 100 | 26 | 1937 | ○ | 33 | 1384 | ○ | A | Inventive Ex. |
| 11 | a11 | 4.0 | 5 | 0 | 0 | 0 | 25 | 15.0 | none | 5.0 | 8.0 | 330 | 100 | 23 | 1913 | ○ | 32 | 1530 | ○ | A | Inventive Ex. |
| 12 | a12 | 3.2 | 5 | 0 | 2 | 1 | 37 | 15.0 | none | 4.0 | 6.0 | 260 | 110 | 28 | 1832 | ○ | 37 | 1374 | ○ | A | Inventive Ex. |
| 13 | a13 | 2.4 | 0 | 2 | 0 | 0 | 10 | 15.0 | none | 3.5 | 7.0 | 200 | 1000 | 50 | 1843 | ○ | 62 | 1228 | ○ | A | Inventive Ex. |
| 14 | a14 | 3.2 | 0 | 0 | 2 | 0 | 10 | 15.0 | none | 4.0 | 7.0 | 300 | 120 | 35 | 1796 | ○ | 46 | 1347 | ○ | A | Inventive Ex. |
| 15 | a15 | 3.8 | 7 | 0 | 0 | 0 | 35 | 15.0 | none | 5.0 | 7.0 | 500 | 100 | 27 | 1892 | ○ | 37 | 1494 | ○ | A | Inventive Ex. |
| 16 | a16 | 2.8 | 5 | 0 | 0 | 0 | 25 | 15.0 | none | 4.0 | 7.0 | 250 | 90 | 54 | 1805 | ○ | 68 | 1289 | ○ | B | Inventive Ex. |
| 17 | a17 | 4.0 | 5 | 0 | 0 | 0 | 25 | 15.0 | none | 5.0 | 8.0 | 330 | 1500 | 29 | 1895 | ○ | 40 | 1516 | ○ | B | Inventive Ex. |
| 18 | a18 | 2.8 | 5 | 0 | 0 | 0 | 25 | 3.0 | none | 4.0 | 7.0 | 250 | 120 | 54 | 1805 | ○ | 68 | 1289 | ○ | B | Inventive Ex. |
| 19 | a19 | 2.8 | 5 | 0 | 0 | 0 | 25 | 15.0 | 5.0 | 4.0 | 7.0 | 250 | 120 | 54 | 1805 | ○ | 68 | 1289 | ○ | B | Inventive Ex. |
| 20 | a20 | 2.8 | 5 | 0 | 0 | 0 | 25 | 15.0 | none | 4.0 | 7.0 | 250 | 65 | 54 | 1805 | ○ | 68 | 1289 | × | D | Inventive Ex. |
| 21 | a21 | 2.8 | 5 | 0 | 2 | 0 | 35 | 15.0 | none | 4.0 | 7.0 | 250 | 1700 | 54 | 1805 | ○ | 68 | 1289 | × | D | Inventive Ex. |
| 22 | a16 | 2.8 | 0 | 0 | 1 | 0 | 5 | 15.0 | none | 4.0 | 7.0 | 250 | 60 | 54 | 1805 | ○ | 68 | 1289 | × | C | Inventive Ex. |
| 23 | a17 | 4.0 | 5 | 0 | 0 | 0 | 25 | 15.0 | none | 5.0 | 8.0 | 330 | 1550 | 29 | 1895 | ○ | 40 | 1516 | × | C | Inventive Ex. |
| 24 | a20 | 2.8 | 5 | 0 | 0 | 0 | 25 | 15.0 | none | 4.0 | 7.0 | 250 | 50 | 54 | 1805 | × | 68 | 1289 | × | F | Comp. Ex. |
| 25 | a21 | 2.8 | 5 | 0 | 2 | 0 | 35 | 15.0 | none | 4.0 | 7.0 | 250 | 1850 | 54 | 1805 | × | 68 | 1289 | × | F | Comp. Ex. |
| 26 | a22 | 2.8 | 4 | 0 | 1 | 0 | 25 | 15.0 | none | 3.5 | 5.5 | 450 | 60 | 38 | 1844 | ○ | 49 | 1317 | ○ | A | Inventive Ex. |
| 27 | a23 | 3 | 5 | 0 | 0 | 0 | 25 | 15.0 | none | 5.0 | 7.0 | 400 | 350 | 39 | 1775 | ○ | 51 | 1302 | ○ | A | Inventive Ex. |
| 28 | a24 | 3.0 | 5 | 0 | 0 | 0 | 25 | 15.0 | none | 6.0 | 7.0 | 700 | 1300 | 32 | 1862 | ○ | 42 | 1365 | ○ | A | Inventive Ex. |
| 29 | a25 | 5.4 | 5 | 0 | 0 | 0 | 25 | 15.0 | none | 5.0 | 9.0 | 450 | 200 | 27 | 1880 | ○ | 41 | 1601 | ○ | A | Inventive Ex. |

*1. $100\times\{(C-tc)+(Si-2\times Os)/5+Mn/40\}=X1$ ...(1)
*2. $2000-600\times\{(C-tc)+(Si-2\times Os)/20+Mn/40\}=X2$ ...(2)
*3. $(1+0.1\times t_{all})\times[100\times\{(C-tc)+(Si-2\times Os)/5+Mn/40\}]=Y1$ ...(3)
*4. $(1-0.8/t_{all})\times[2000-600\times\{(C-tc)+(Si-2\times Os)/20+Mn/40\}]=Y2$ ...(4)
*5. $D=5\times A+5\times M+5\times CL+2\times G$ ...(7)

## Reference Signs List

- 1, 2 steel sheet
- 4, 5 welding electrode
- 6 weld
- 7 cracking

8 welding spot
9 welded spot
10 welded member
11 metal coating layer
12 pre-coating layer
13 decarburized layer
14 internally oxidized layer

**Claims**

1. A resistance spot welding method for joining a plurality of steel sheets together by clamping a sheet assembly, consisting of the plurality of overlapping steel sheets, between a pair of welding electrodes, and applying a current to the sheet assembly while applying pressure thereon, the method comprising a holding step of holding the welding electrodes after completion of the application of current, wherein in the holding step, a pressure holding time H (ms) satisfies X1max < H < X2min, where Xlmax is the maximum value of the calculated values X1 of the following formula (1) for each steel sheet, and X2min is the minimum value of the calculated values X2 of the following formula (2) for each steel sheet:

$$100 \times \{(C - tc) + (Si - 2 \times Os)/5 + Mn/40\} = X1 \quad (1)$$

$$2000 - 600 \times \{(C - tc) + (Si - 2 \times Os)/20 + Mn/40\} = X2 \quad (2)$$

where C (mass %), Si (mass %), and Mn (mass %) represent the C content, the Si content, and the Mn content of the steel sheet, tc (mm) represents the thickness of a decarburized layer per one surface of the steel sheet, and Os ($g/m^2$) represents the amount of internal oxidation per one surface of the steel sheet.

2. The resistance spot welding method according to claim 1, wherein in the holding step, the pressure holding time H (ms) satisfies Y1max < H < Y2min, where Y1max is the maximum value of the calculated values Y1 of the following formula (3) for each steel sheet, and Y2min is the minimum value of the calculated values Y2 of the following formula (4) for each steel sheet:

$$(1 + 0.1 \times t_{all}) \times [100 \times \{(C - tc) + (Si - 2 \times Os)/5 + Mn/40\}] = Y1 \quad (3)$$

$$(1 - 0.8/t_{all}) \times [2000 - 600 \times \{(C - tc) + (Si - 2 \times Os)/20 + Mn/40\}] = Y2 \quad (4)$$

where C (mass %), Si (mass %), and Mn (mass %) represent the C content, the Si content, and the Mn content of the steel sheet, tc (mm) represents the thickness of a decarburized layer per one surface of the steel sheet, Os ($g/m^2$) represents the amount of internal oxidation per one surface of the steel sheet, and $t_{all}$ (mm) represents the sum of the thicknesses of the plurality of overlapping steel sheets.

3. The resistance spot welding method according to claim 1, wherein resistance spot welding is performed such that upon the application of current, the shortest distance Le from the center of a welding spot to an end surface of the steel sheet is more than 3.0 mm, and, when there are one or more welded spots around the welding spot, the center-to-center distance Lp between the welding spot and a welded spot closest to the welding spot is 6.0 mm or more.

4. The resistance spot welding method according to claim 2, wherein resistance spot welding is performed such that upon the application of current, the shortest distance Le from the center of a welding spot to an end surface of the steel sheet is more than 3.0 mm, and, when there are one or more welded spots around the welding spot, the center-to-center distance Lp between the welding spot and a welded spot closest to the welding spot is 6.0 mm or more.

5. A method for producing a welded member, comprising:

   a first step of stacking a plurality of steel sheets to obtain a sheet assembly; and
   a second step of resistance-spot-welding the sheet assembly by the resistance spot welding method according to any one of claims 1 to 4.

FIG. 1

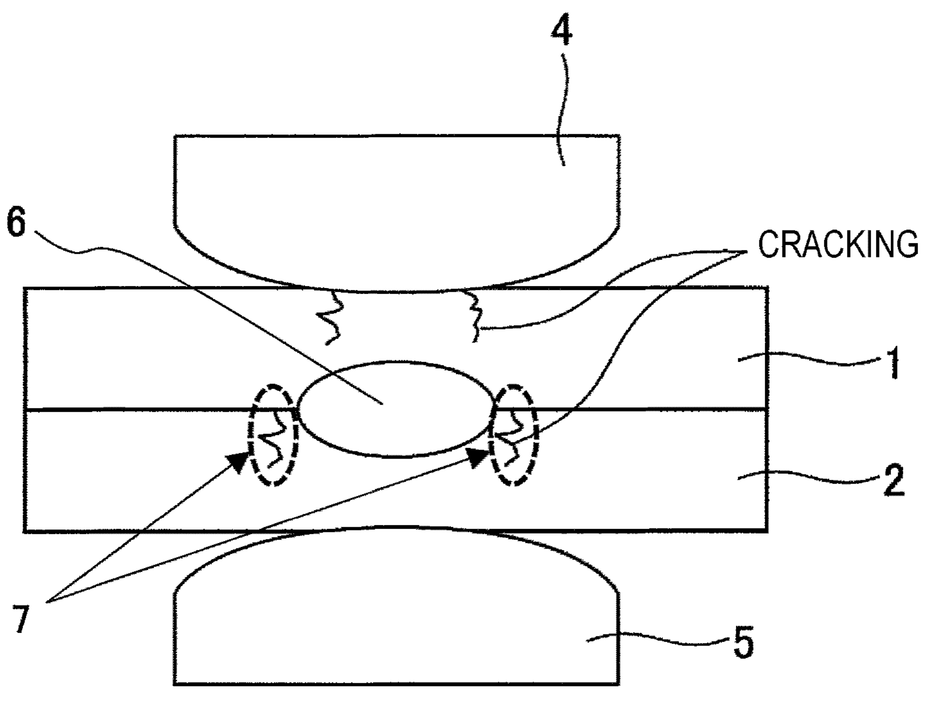

FIG. 2

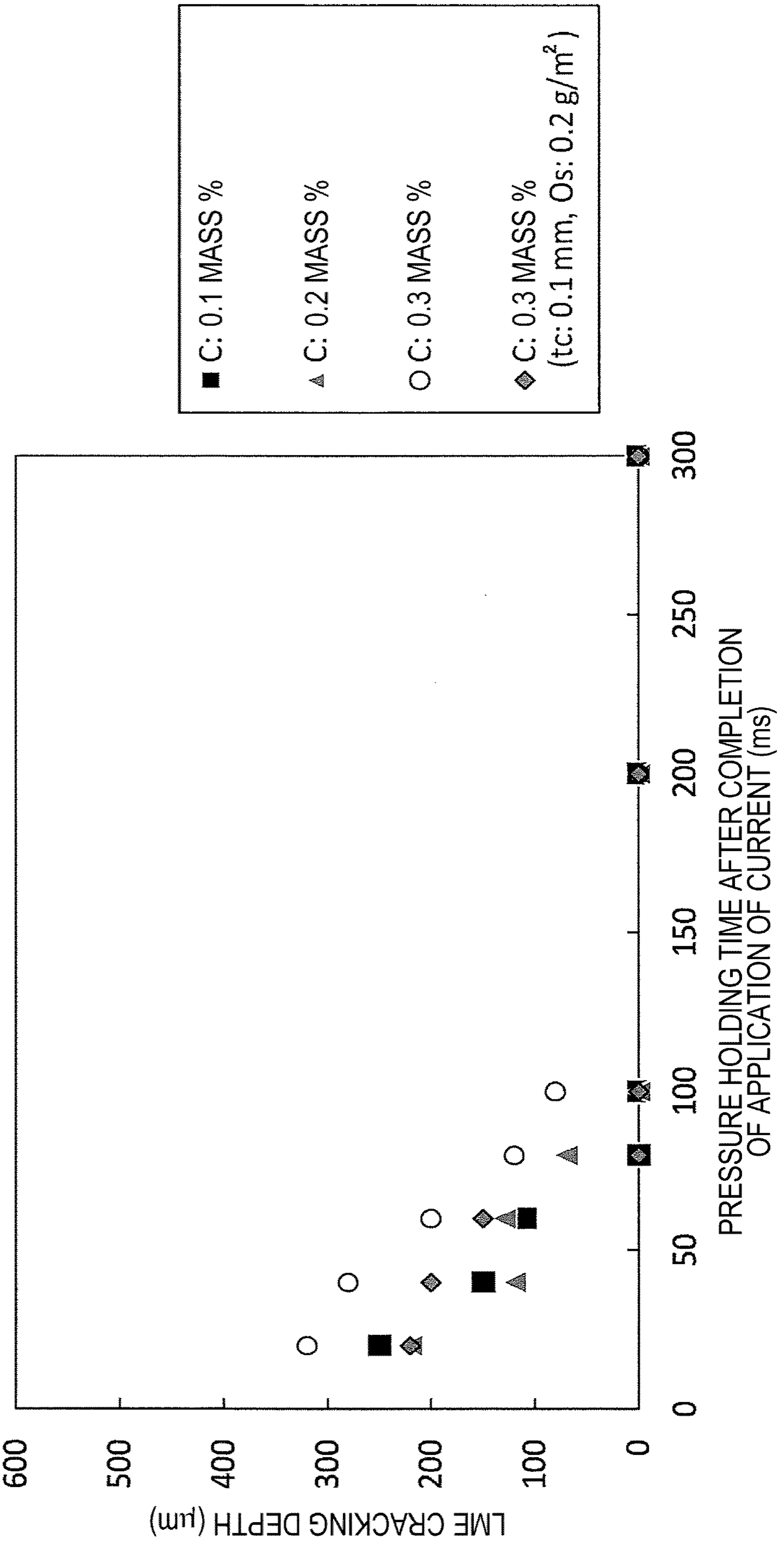
C: 0.1 MASS %
C: 0.2 MASS %
C: 0.3 MASS %
C: 0.3 MASS %
(tc: 0.1 mm, Os: 0.2 g/m²)
LME CRACKING DEPTH (μm)
0
100
200
300
400
500
600
0
50
100
150
200
250
300
PRESSURE HOLDING TIME AFTER COMPLETION OF APPLICATION OF CURRENT (ms)

FIG. 3

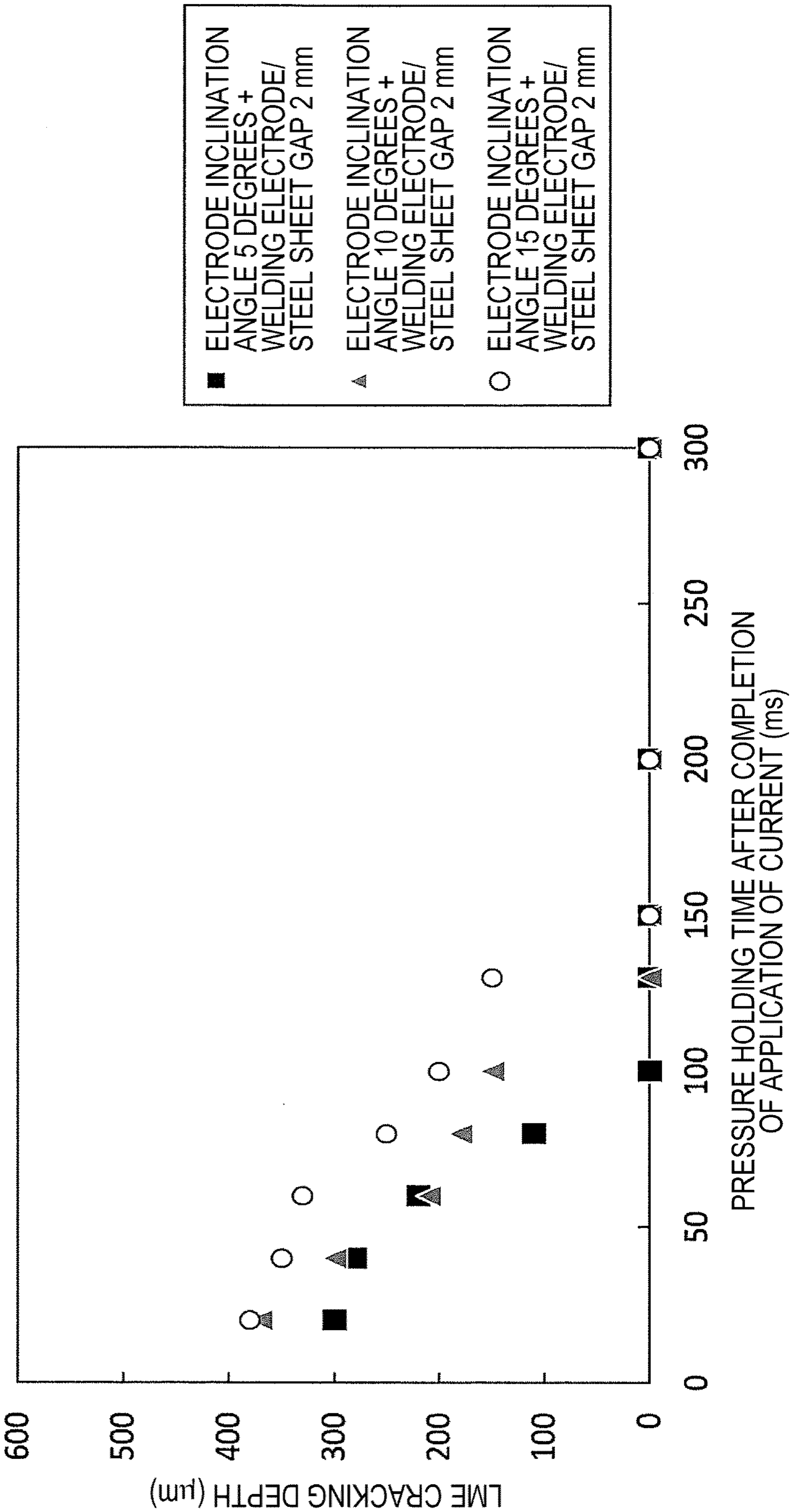
ELECTRODE INCLINATION ANGLE 5 DEGREES + WELDING ELECTRODE/ STEEL SHEET GAP 2 mm
ELECTRODE INCLINATION ANGLE 10 DEGREES + WELDING ELECTRODE/ STEEL SHEET GAP 2 mm
ELECTRODE INCLINATION ANGLE 15 DEGREES + WELDING ELECTRODE/ STEEL SHEET GAP 2 mm
LME CRACKING DEPTH (μm)
600
500
400
300
200
100
0
0
50
100
150
200
250
300
PRESSURE HOLDING TIME AFTER COMPLETION OF APPLICATION OF CURRENT (ms)

FIG. 4

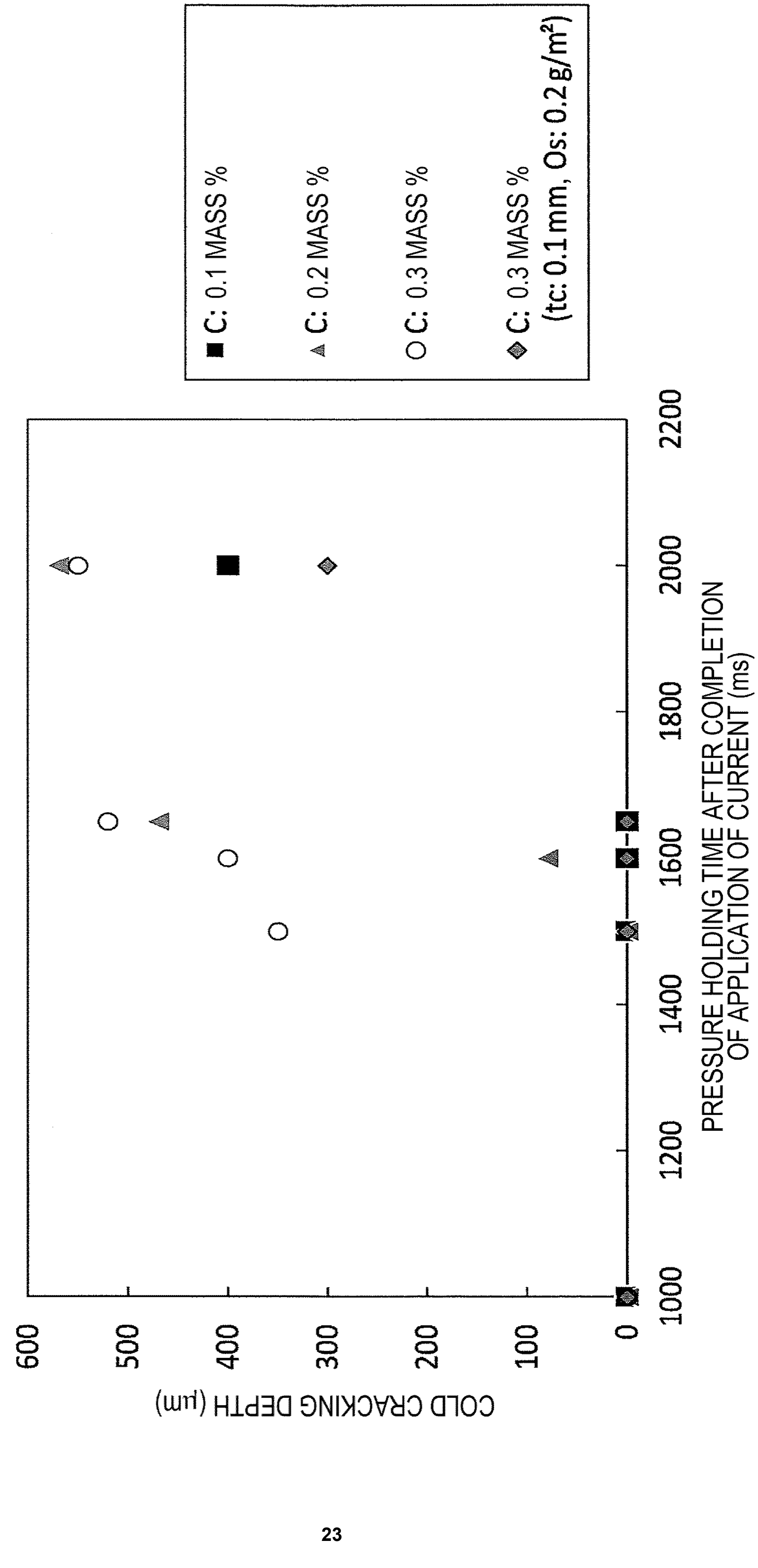
C: 0.1 MASS %
C: 0.2 MASS %
C: 0.3 MASS %
C: 0.3 MASS %
(tc: 0.1 mm, Os: 0.2 g/$m^2$)
COLD CRACKING DEPTH (μm)
0
100
200
300
400
500
600
1000
1200
1400
1600
1800
2000
2200
PRESSURE HOLDING TIME AFTER COMPLETION OF APPLICATION OF CURRENT (ms)

FIG. 5

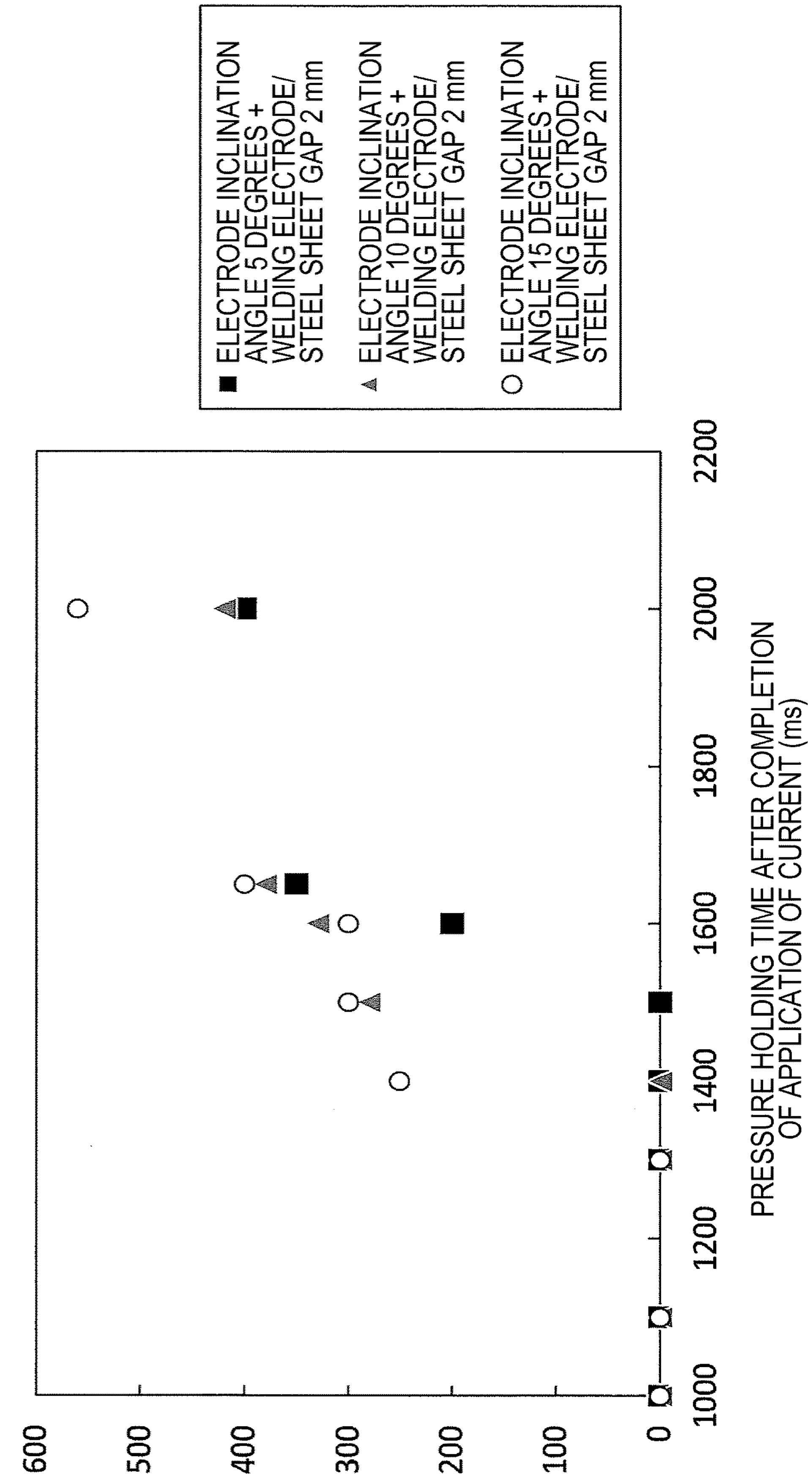

COLD CRACKING DEPTH (μm)
0
100
200
300
400
500
600
1000
1200
1400
1600
1800
2000
2200
PRESSURE HOLDING TIME AFTER COMPLETION OF APPLICATION OF CURRENT (ms)
ELECTRODE INCLINATION ANGLE 5 DEGREES + WELDING ELECTRODE/ STEEL SHEET GAP 2 mm
ELECTRODE INCLINATION ANGLE 10 DEGREES + WELDING ELECTRODE/ STEEL SHEET GAP 2 mm
ELECTRODE INCLINATION ANGLE 15 DEGREES + WELDING ELECTRODE/ STEEL SHEET GAP 2 mm

FIG. 6

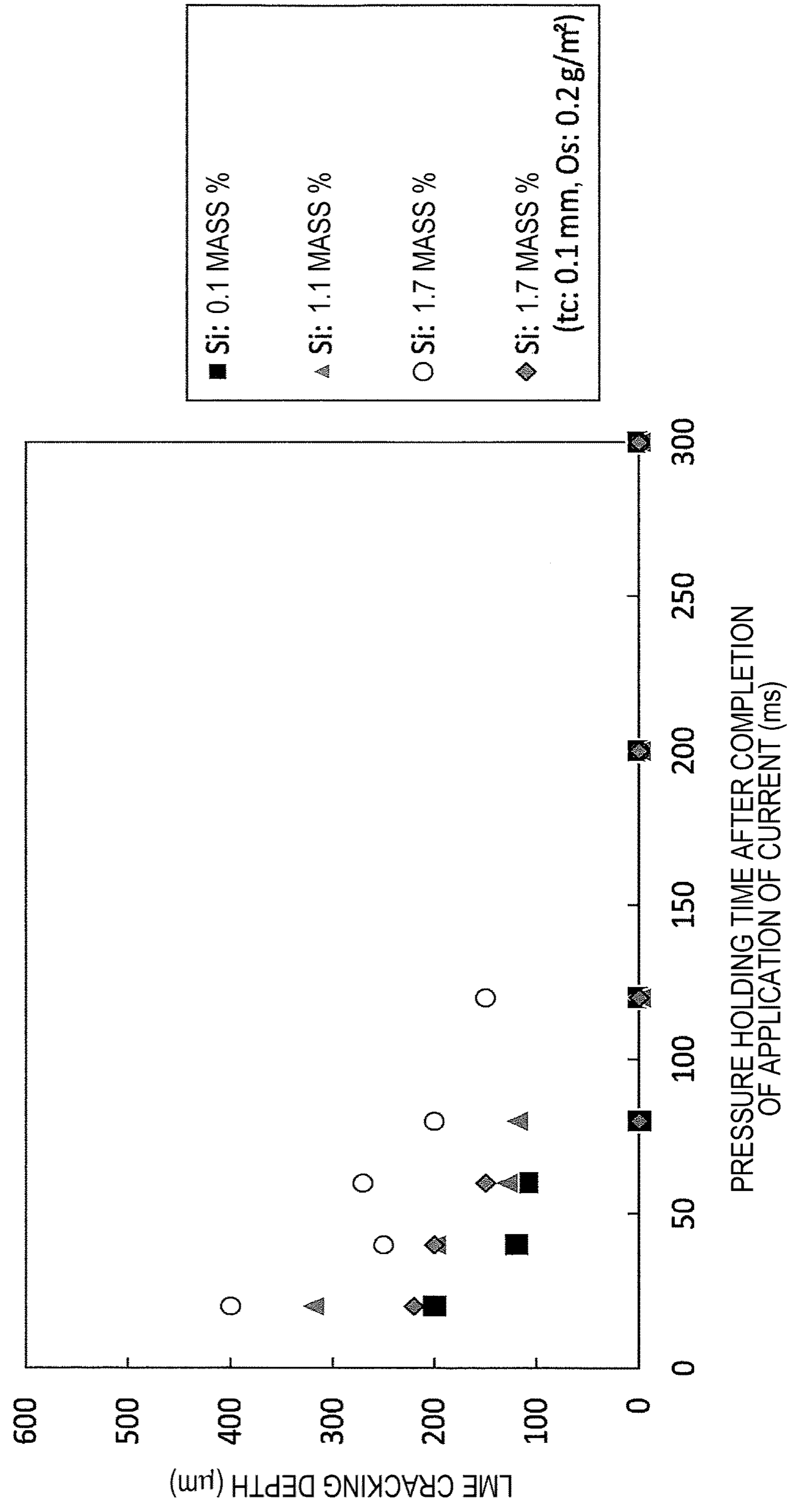
LME CRACKING DEPTH (μm)
600
500
400
300
200
100
0
0
50
100
150
200
250
300
PRESSURE HOLDING TIME AFTER COMPLETION OF APPLICATION OF CURRENT (ms)
Si: 0.1 MASS %
Si: 1.1 MASS %
Si: 1.7 MASS %
Si: 1.7 MASS %
(tc: 0.1 mm, Os: 0.2 g/m²)

FIG. 7

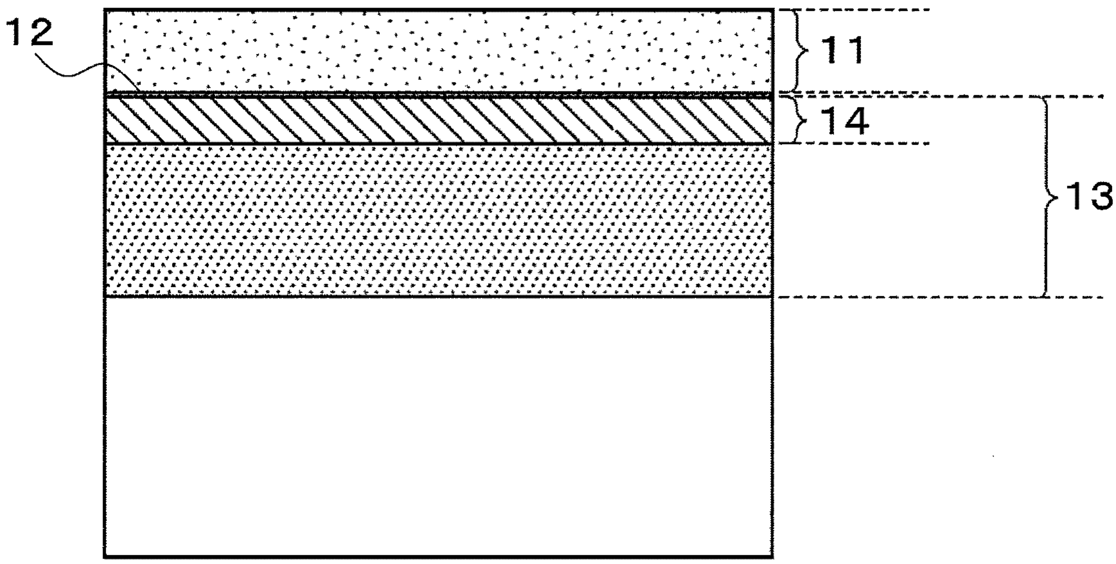


FIG. 8

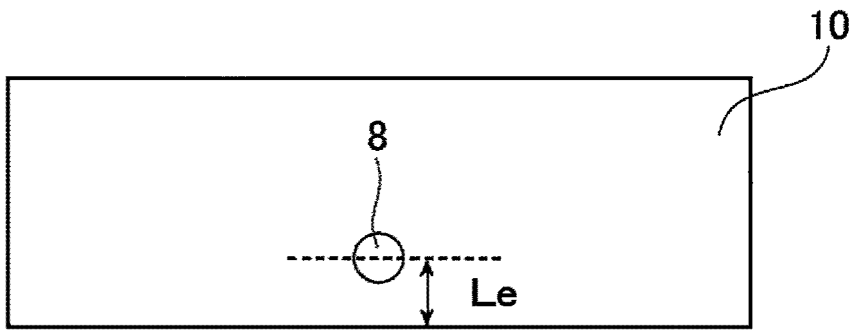

FIG. 9

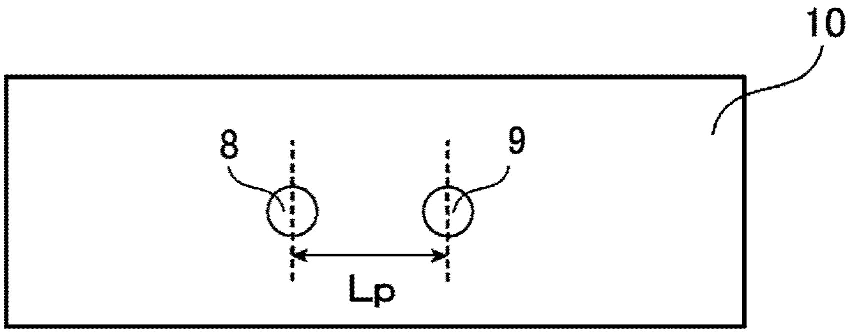

**INTERNATIONAL SEARCH REPORT**

International application No.
**PCT/JP2024/006687**

**A. CLASSIFICATION OF SUBJECT MATTER**

***B23K 11/24***(2006.01)i; ***B23K 11/11***(2006.01)i
FI: B23K11/24 394; B23K11/11 540

According to International Patent Classification (IPC) or to both national classification and IPC

**B. FIELDS SEARCHED**

Minimum documentation searched (classification system followed by classification symbols)

B23K11/24; B23K11/11

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/097736 A1 (JFE STEEL CORPORATION) 12 May 2022 (2022-05-12)<br>entire text, all drawings | 1-5 |
| A | WO 2015/093568 A1 (NIPPON STEEL & SUMITOMO METAL CORPORATION) 25 June 2015 (2015-06-25)<br>entire text, all drawings | 1-5 |
| A | JP 2021-154364 A (NIPPON STEEL CORPORATION) 07 October 2021 (2021-10-07)<br>entire text, all drawings | 1-5 |
| A | JP 2021-169113 A (KABUSHIKI KAISHA KOBE SEIKO SHO) 28 October 2021 (2021-10-28)<br>entire text, all drawings | 1-5 |
| A | JP 2021-74748 A (NIPPON STEEL CORPORATION) 20 May 2021 (2021-05-20)<br>entire text, all drawings | 1-5 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/006687**

| Patent document cited in search report | Publication date (day/month/year) | Patent family member(s) | Publication date (day/month/year) |
|---|---|---|---|
| WO 2022/097736 A1 | 12 May 2022 | US 2023/0374639 A1<br>entire text, all drawings<br>CN 116419989 A | |
| WO 2015/093568 A1 | 25 June 2015 | US 2016/0228973 A1<br>entire text, all drawings<br>CN 105636735 A | |
| JP 2021-154364 A | 07 October 2021 | (Family: none) | |
| JP 2021-169113 A | 28 October 2021 | US 2023/0191526 A1<br>entire text, all drawings<br>CN 115379915 A | |
| JP 2021-74748 A | 20 May 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10195597 A
- JP 2003103377 A
- JP 2003236676 A
- JP 2017047475 A